(19) Europäisches Patentamt
European Patent Office
Office européen des brevets

(11) Publication number: **0 422 231 B1**

(12) **EUROPEAN PATENT SPECIFICATION**

(45) Date of publication of patent specification: **27.12.95**

(51) Int. Cl.[6]: **C08G 73/00**, C08G 73/06, C08G 65/48, C08G 81/00, C10M 107/44, C08G 65/32

(21) Application number: **90902685.8**

(22) Date of filing: **01.02.90**

(86) International application number: **PCT/JP90/00125**

(87) International publication number: **WO 90/08795 (09.08.90 90/19)**

The file contains technical information submitted after the application was filed and not included in this specification

(54) **HIGH-MOLECULAR POLYTRIAZINE**

(30) Priority: **01.02.89 JP 20835/89**

(43) Date of publication of application: **17.04.91 Bulletin 91/16**

(45) Publication of the grant of the patent: **27.12.95 Bulletin 95/52**

(84) Designated Contracting States: **DE FR GB IT NL**

(56) References cited:
**JP-A- 0 476 994**
**JP-A-57 175 185**
**JP-B- 0 512 083**
**JP-B- 0 535 360**
**US-A- 3 250 807**
**US-A- 3 489 727**
**US-A- 3 660 315**
**US-A- 4 102 872**
**US-A- 4 242 498**
**US-A- 4 434 106**
**US-A- 4 567 301**

**Ind.Eng.Chem.Prod.Res.Dev.,20(1981)694-696**

(73) Proprietor: **Asahi Kasei Kogyo Kabushiki Kaisha**
**2-6, Dojimahama 1-chome**
**Kita-ku**
**Osaka-shi**
**Osaka 530 (JP)**

(72) Inventor: **IKEDA, Masanori**
**356-91, Obuchi**
**Fuji-shi, Shizuoka-ken 417 (JP)**
Inventor: **AOSHIMA, Atsushi**
**6-3-19-402, Kikuna,Kohoku-ku**
**Yokohama-shi,Kanagawa-ken 222 (JP)**

(74) Representative: **Blake, John Henry Francis et al**
**BROOKES AND MARTIN**
**High Holborn House**
**52/54 High Holborn**
**London WC1V 6SE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

Technical Field

The present invention relates to a high molecular weight polytriazine (hereinafter frequently referred to simply as "PTR") derived from polyimidoylamidine (hereinafter frequently referred to simply as "PIA") prepared from hexafluoropropylene oxide (hereinafter frequently referred to simply as "HFPO").

More particularly, the present invention is concerned with a novel high molecular weight PTR derived from the high molecular weight PIA having an intrinsic viscosity of from 0.12 to 0.60 dl/g and a method for preparing the same, and new uses for the PIA and PTR.

The high molecular weight PIA per se according to the present invention is a useful polymer. Further, the high molecular-weight PIA is also useful for preparing various high performance polymers therefrom utilizing the reactivity of the imidoylamidine group of the PIA. These polymers have various unique properties, which the conventional products derived from a low molecular weight PIA do not have, due to their high molecular weight characteristics. Therefore, these polymers are extremely useful materials for commercial use.

For example, various high molecular weight polytriazines having high stability can be easily obtained from the high molecular weight PIA of the present invention. Of these polytriazines, a polytriazine having a high molecular weight is a solid substance and, therefore, is particularly useful as a novel, chemically stable, structural material.

Further, a high molecular weight polytriazine shows sufficient viscosity even at a high temperature and, therefore, is useful as a viscosity modifier for a fluoro-oil and a fluoro-grease each comprising a perfluoropolyether.

Furthermore, according to the present invention, it has been found that the polytriazine having an intrinsic viscosity within a specific range is advantageously useful as a lubricant usable under high temperature and/or high vacuum conditions, a lubricant for a magnetic recording material, or a highly stable, torque transmitting oil.

Moreover, according to the present invention, it has also been found that the polyimidoylamidine having an intrinsic viscosity within a specific range is advantageously useful as a lubricant for a magnetic recording material or a surface treating agent for a metallic or ceramic material.

Background Art

An HFPO type PIA is generally obtained by the reaction of an HFPO oligomer dinitrile represented by $R_{fo}(CN)_2$ with ammonia. Although the mechanism of the reaction has not yet been elucidated in detail, it is believed that bivalent groups derived from HFPO are interbonded through an imidoylamidine group formed by reactions of following formulae (1) and (2):

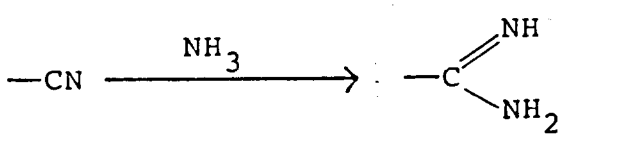

(1)

nitrile group          amidine group

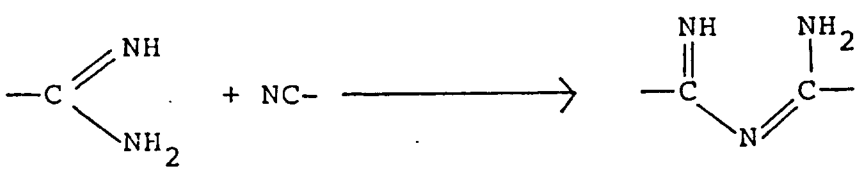

(2)

imidoylamidine group

Heretofore, various methods for synthesizing PIA from a bifunctional HFPO oligomer have been reported. However, it has not yet been known how to synthesize a PIA having a weight average molecular weight of 3 x $10^4$ or more, or having an intrinsic viscosity of 0.10 dl/g or more.

As a method for preparing a conventional HFPO type PIA, there are known, for example, a method described in U.S. Patent No. 4,242,498 and Industrial Engineering Chemistry; Product Research Development, 20, p.694 (1981), in which $R_{fo}(CN)_2$ is reacted with ammonia while refluxing ammonia [formula (3)]:

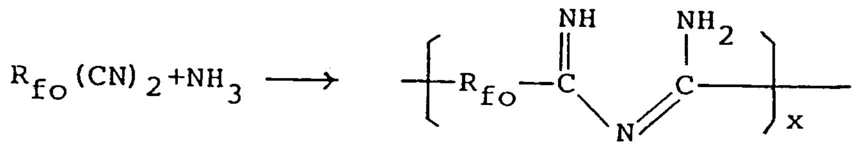
(3)

and a method described in U.S. Patent No. 4,434,106, US Patent No 4,567,301 and Journal of Polymer Science; Polymer Letter Edition, 20, p.467 (1982), in which the molecular weight is successively increased by the reactions represented by following formulae (4), (5), (6) and (7):

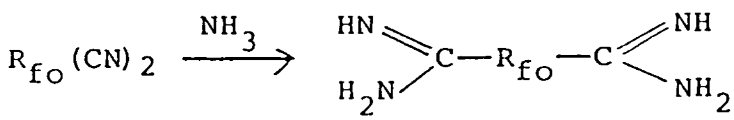

(4)

(IV)

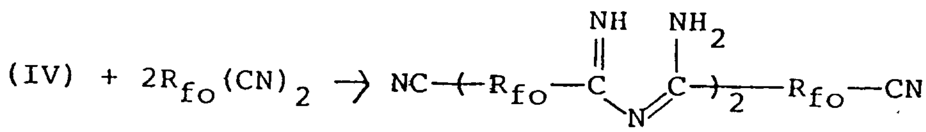
(5)

(V)

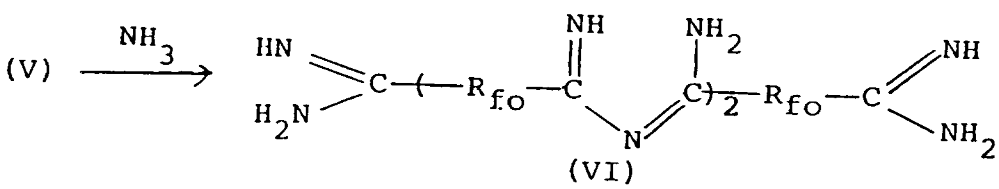

(6)

(VI)

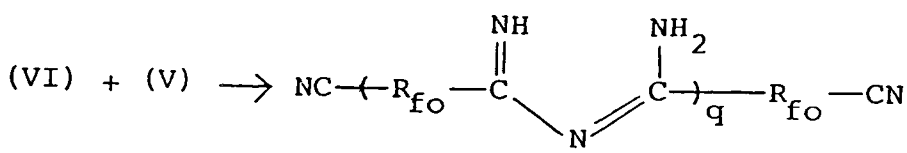
(7)

(VII)

However, the method of formula (3) is disadvantageous in that the method is poor in reproducibility, and that, by this method, it is difficult to attain a high degree of polymerization. Therefore, this method is of no practical use. For example, a PIA prepared by the method of formula (3) is a viscous polymer having fluidity, which has an intrinsic viscosity of 0.095 dl/g at the highest. Further, a polytriazine obtained by treating such a PIA with trifluoroacetic anhydride is also a viscous polymer having fluidity, which has a maximum weight average molecular weight of only about 2.8 x $10^4$ and exhibits an intrinsic viscosity of only 0.11 dl/g.

With respect to the method comprising the reactions of formulae (4), (5), (6) and (7), when it is intended to obtain a polymer of a high degree of polymerization, it is necessary to repeat the multi-stage reactions and, therefore, the operation is extremely troublesome. Moreover, when the preparation of a PIA having a higher degree of polymerization is intended by this method, various problems are encountered. That is, not only is it difficult to realize completely the same reaction as desired in each step, but also it is practically impossible to isolate and purify the desired polymer formed in each step. Therefore, this method is of no practical use.

In fact, a PIA which has a maximum molecular weight among the PIA's prepared by the above-mentioned method is a polymer of formula (VII) having a degree of polymerization represented by q of only 8 (molecular weight of about $1.4 \times 10^4$).

It is known that the PIA thus prepared can be converted into a polytriazine having a stable triazine ring by the ring closure reaction with an acid anhydride or an acid halide, which reaction is represented by following formula (8):

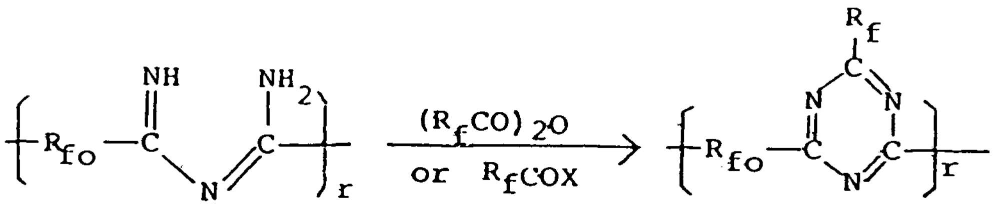


(8)

wherein $R_f$ represents a perfluoroalkyl chain or a perfluoroether chain, and X represents a fluorine atom, a chlorine atom or a bromine atom.

However, a polytriazine (PTR) derived from the conventionally obtained low molecular weight, HFPO type PIA having an intrinsic viscosity of less than 0.10 dl/g is a viscous polymeric substance having fluidity due to its low molecular weight and, therefore, such a polytriazine is limited in utility. For this reason, any practical use has not been found for such a polytriazine.

As mentioned above, the operation of the conventional method for the synthesis of an HFPO type PIA is troublesome. Further, the PIA produced by the method has a low molecular weight and, therefore, the use thereof as a polymer material is limited.

U.S. Patent No. 4,102,872 discloses a process for preparing a fluorocarbon triazine polymer. The fluorocarbon triazine polymer prepared in this process is represented by the following formula:

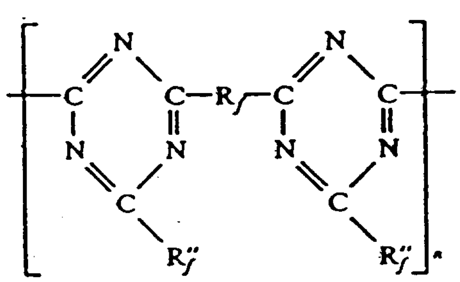

wherein $R_f$ is a perfluoroalkylene or perfluoroalkylene ether group, $R_{f'}$ and $R_{f''}$ are perfluoroalkyl radicals containing 1 to 12, inclusive, carbon atoms, and n is an integer equal to the number of recurring units, which can be defined as such that the triazine polymer has an intrinsic viscosity ranging from about 0.2 to 0.6.

As shown in the above formula, this triazine polymer contains two triazine rings (connected through one linkage $R_f$) per recurring unit, differing from the PTR of the present invention which contains one triazine ring per recurring unit. Further, in this process, an expensive silver salt is required in an equimolar amount to a triazine ring and, therefore, this method cannot advantageously be used on an industrial scale.

Disclosure of The Invention

The present inventors have made extensive and intensive studies with a view toward developing a practical method for preparing a high molecular weight, HFPO type PIA. As a result, it has unexpectedly been found that a high molecular weight PIA, which has heretofore not been obtained, can be prepared by reacting an HFPO oligomer dinitrile (as a starting material) having a number average molecular weight of from $1 \times 10^3$ to $5 \times 10^4$ and having a bifunctionality of at least 95 mole % with ammonia and subsequently reacting the resultant product with an HFPO oligomer dinitrile in a specific amount ratio.

From the high molecular weight PIA, a high molecular weight PTR can be synthesized by simple operation. It has also been found that the high molecular weight PTR has various excellent properties which the conventional low molecular weight PTR do not have and, therefore, it is extremely useful, for example, as a viscosity modifier for a fluoro-oil and a fluoro-grease, and the like.

The present invention has been completed based on these novel findings.

Accordingly, in one aspect of the present invention, there is provided a polytriazine comprising recurring units of the following formula:

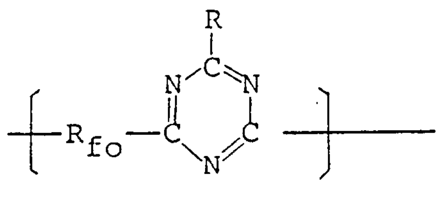

(III)

wherein R is a perfluoroalkyl group having from 1 to 15 carbon atoms which is unsubstituted or substituted or a perfluoroether group having from 2 to 100 carbon atoms which is unsubstituted or substituted, and $R_{fo}$ is a bivalent residue (VIII-1) or (VIII-2) of a bifunctional hexafluoropropylene oxide oligomer, represented by the following formula:

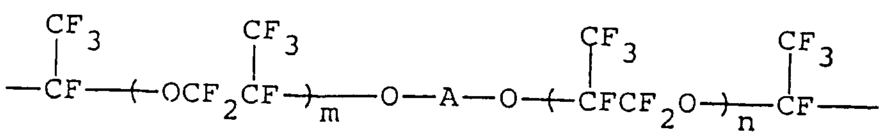

(VIII-1)

or

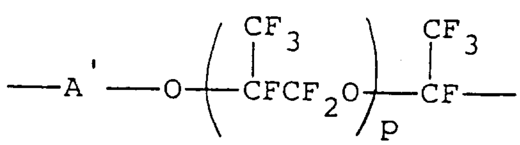

(VIII-2)

in which A is a perfluoroalkylene group having from 2 to 20 carbon atoms which is unsubstituted or substituted, or a bivalent perfluoroether residue having from 4 to 25 carbon atoms which is unsubstituted or substituted, A' is a perfluoroalkylene group having from 1 to 19 carbon atoms which are unsubstituted or substituted, or a bivalent perfluoroether residue having from 3 to 24 carbon atoms which is unsubstituted or substituted, m and n are each a positive integer where $4 \leqq m + n \leqq 300$, and p is an integer of from 4 to 300.

The bivalent residue (VIII-1) or (VIII-2) has a number average molecular weight of from $1 \times 10^3$ to $5 \times 10^4$. The units of formula (III) are the same or different. The polytriazine has an intrinsic viscosity of from 0.308 to 0.65 dl/g measured in perfluorohexane at 40 °C.

In a further aspect of the present invention, there is provided a method for preparing said polytriazine, which comprises reacting a polyimidoylamidine comprising recurring units of the following formula:

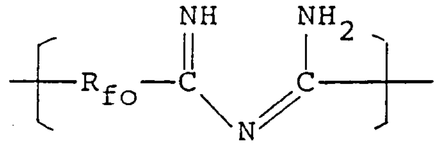

(I)

wherein $R_{fo}$ is as defined above, with an acylating agent capable of forming, or containing, the substituent R as defined above.

The polyimidoylamidine may be prepared by

(a) reacting a hexafluoropropylene oxide oligomer dinitrile ($\alpha$) represented by the following formula:

$R_{fo}(CN)_2$ (II)

wherein $R_{fo}$ is as defined above,

the oligomer dinitrile ($\alpha$) having a number average molecular weight of from 1 x $10^3$ to 5 x $10^4$ and a bifunctionality of at least 95 mole %,

with ammonia in a molar ratio of the ammonia to the oligomer dinitrile (a) of at least 5, and

(b) reacting the resultant reaction mixture with a hexafluoropropylene oxide oligomer dinitrile ($\beta$) represented by the same formula as formula (II), the oligomer dinitrile ($\beta$) having a number average molecular weight of from 1 x $10^3$ to 5 x $10^4$ and a bifunctionality of at least 95 mole % and being employed in a molar ratio of from 0.60 to 0.99 relative to the oligomer dinitrile ($\alpha$),

wherein the oligomer dinitriles ($\alpha$) and ($\beta$) are the same or different.

Hereinbelow, the present invention will be explained in detail.

Bifunctional oligomer $R_{fo}(CN)_2$ [formula (II)] which is used in the present invention for preparing a polyimidoylamidine can be synthesized by various methods. Generally, there may be used either Method a') in which a bifunctional HFPO oligomer synthesized using a bifunctional polymerization initiator, is used as a starting material, or Method b') in which a bifunctional HFPO oligomer containing an ester group and an acid fluoride group (or a $-CF_2OM$ group where M represents an alkali metal atom), which has been synthesized using a monofunctional polymerization initiator containing an ester group, is used as a starting material.

Illustratively stated, oligomer dinitrile $R_{fo}(CN)_2$ [formula (II)] is synthesized, as shown in the following synthetic example, by converting to amide groups the terminal groups of a bifunctional HFPO oligomer obtained by the above-mentioned Method a') or Method b') to prepare an $R_{fo}(CONH_2)_2$, followed by dehydration using diphosphorus pentaoxide.

The synthetic example can be illustrated as follows:

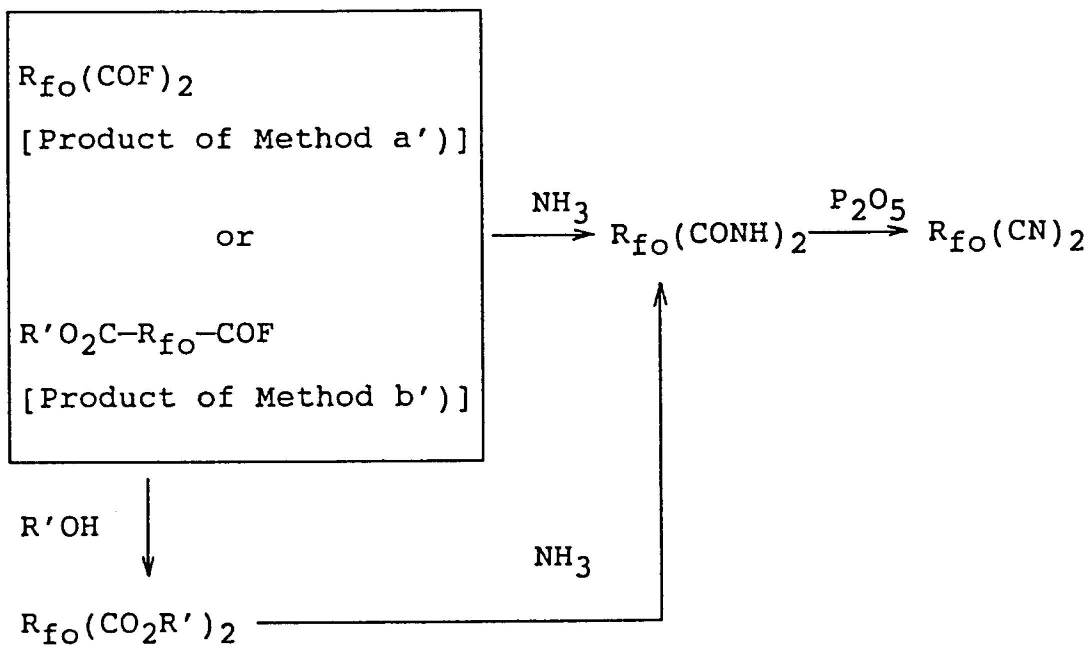


(R': a lower alkyl group)

Method a') and Method b') are explained below in detail.

a') Method in which an HFPO oligomer obtained using a bifunctional polymerization initiator is used as a starting material.

A bifunctional HFPO oligomer can be produced by the polymerization of HFPO using a bifunctional polymerization initiator.

For example, the bifunctional HFPO oligomer may be produced by a method in which reaction products of various fluorine-containing dicarboxylic fluorides with an alkali metal fluoride, such as cesium fluoride, are used as polymerization initiators, as described in, for example, Japanese Patent Application Publication Specification No. 53-5360 (corresponding to US Patent No. 3,660,315), Japanese Patent Application Laid-Open Specification No. 47-6994, Japanese Patent Application Laid-Open Specification No. 57-175185 and U.S. Patent No. 3,250,807.

The fluorine-containing dicarboxylic fluorides which are used for producing an HFPO polymerization initiator is represented by the following formula (IX):

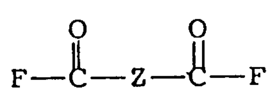

(IX)

wherein Z represents a perfluoroalkylene group which is unsubstituted or substituted, a bivalent perfluoroether residue which is unsubstituted or substituted, or a bond.

Examples of the above-mentioned fluorine-containing dicarboxylic fluorides include dicarboxylic fluorides represented by formulae:

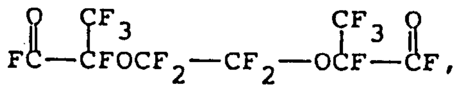
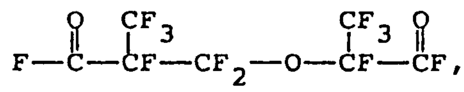

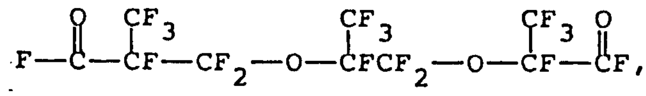

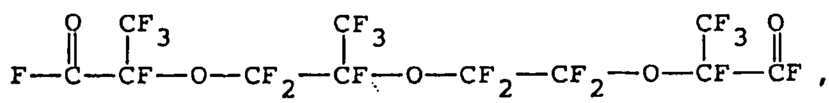

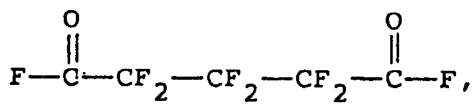
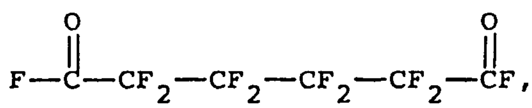
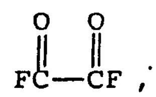

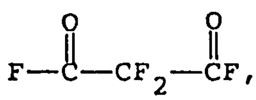
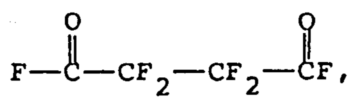

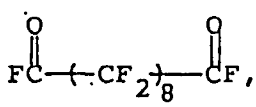
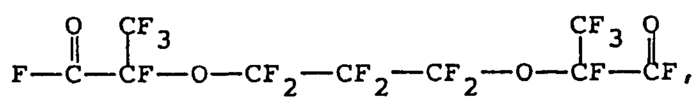

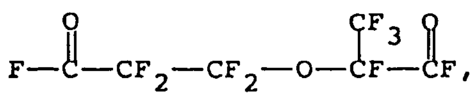

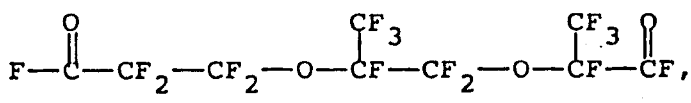

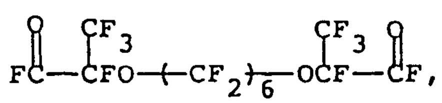

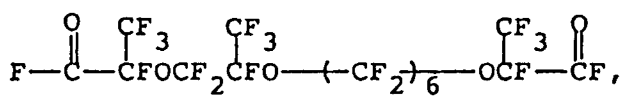 and

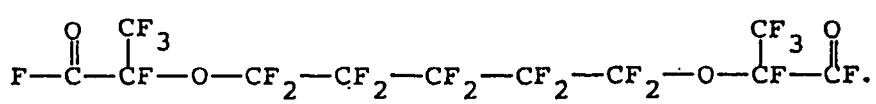

When the dicarboxylic fluoride represented by formula (IX) is reacted with, for example, cesium fluoride, a polymerization initiator species represented by the following formula (X):

$CsOCF_2\text{-}Z\text{-}CF_2OCs$ (X)

is formed. Species (X) is then reacted with HFPO to form a bifunctional HFPO oligomer represented by the following formula (XI):

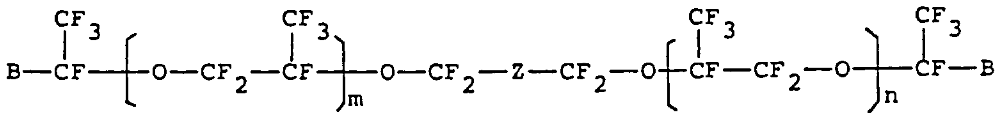 (XI)

wherein B is

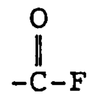

or $-CF_2OCs$, m and n are each a positive integer, and $-CF_2ZCF_2-$ in formula (XI) corresponds to -A- in formula (VIII-1).

The terminals of the oligomer represented by formula (XI) is in the equilibrium state as represented by following formula:

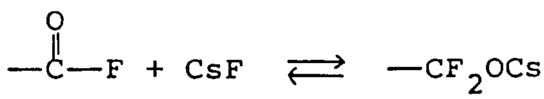

Therefore, B can assume either

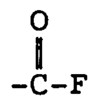

or $-CF_2OCs$.

When a perfluoroketone is reacted with an alkali metal fluoride, such as cesium fluoride, the reaction proceeds in the following manner:

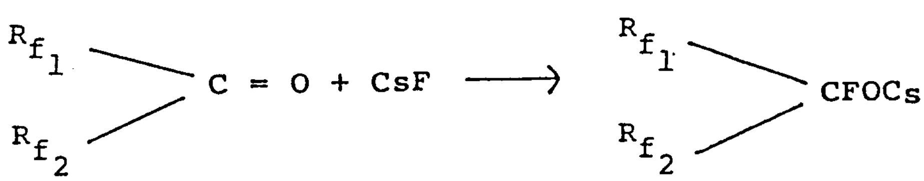

wherein

$R_{f_1}$

and

$R_{f_2}$

are each a perfluoroalkyl group,

to thereby form a compound having the alkoxide structure shown above, which structure is similar to that of species (X). Such a compound is useful as a polymerization initiator. Therefore, the use of either a perfluorodiketone, or a substance of a perfluoro structure which contains an acid fluoride group and a

ketone group, in combination with an alkali metal fluoride, can also be used as a bifunctional polymerization initiator for HFPO.

b') Method in which an HFPO oligomer obtained using a monofunctional polymerization initiator containing an ester group is used as a starting material.

A bifunctional HFPO oligomer containing an ester group and an acid fluoride group (or $-CF_2OM$ group, where M represents an alkali metal atom) is synthesized in substantially the same manner as in the HFPO polymerization method described in Method a') except that a reaction product of an ester group-containing acid fluoride represented by formula (XXII) with an alkali metal fluoride, such as cesium fluoride,

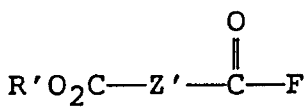  (XXII)

wherein R' is an alkyl group having from 1 to 10 carbon atoms and Z' has the same meaning as Z in formula (IX) is used as a polymerization initiator. This synthesis can be illustrated as follows:

(XXII) + CsF → $R'O_2C—Z'—CF_2OCs$  (XXIII)

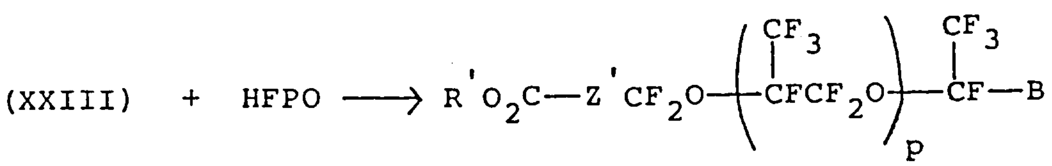

(XXIV)

wherein p is an integer of 4 to 300, B has the same meaning as B in formula (XI), and $-Z'-CF_2-$ corresponds to A' in formula (VIII-2).

Examples of ester group-containing acid fluorides represented by the above-mentioned formula (XXII) include the following compounds:

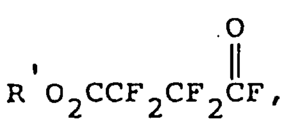 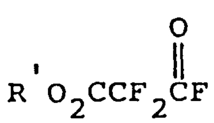 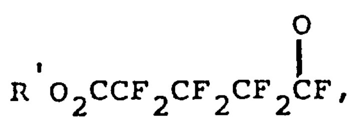

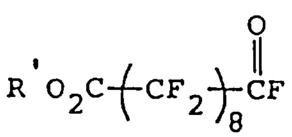 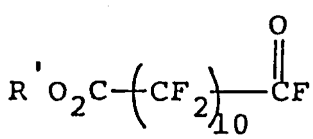 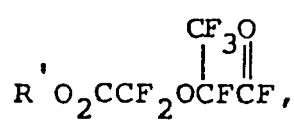

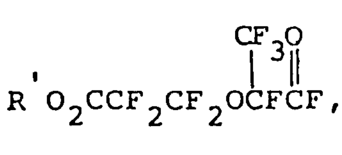 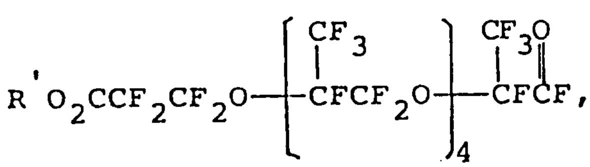 and

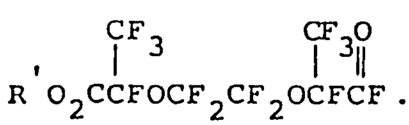

The carbon number of R' is not specifically limited. Generally, an alkyl group having from 1 to 10 carbon atoms is used as R'. Particularly, a lower alkyl group, such as a methyl group, an ethyl group or a propyl group, is preferred from the standpoint of ease in synthesis and operation.

As mentioned above, A in formula (VIII-1) and A' in formula (VIII-2) each represent a bifunctional polymerization initiator residue of the bifunctional HFPO oligomer, and are each a perfluoroalkylene group or a bivalent perfluoroether residue, or a bivalent group or residue derived therefrom in which the fluorine atom is substituted with an inert substituent group, such as a hydrogen atom, a bromine atom or an iodine atom, in a ratio of not greater than 30 % of the total number of fluorine atoms of the unsubstituted bivalent group or residue.

In the present invention, when A is a perfluoroalkylene group, the number of carbon atoms of the group is from 2 to 20, preferably from 2 to 12, more preferably from 2 to 8. When A' is a perfluoroalkylene group, the number of carbon atoms of the group is from 1 to 19, preferably from 2 to 11, more preferably from 2 to 7. When A is a bivalent perfluoroether residue, the number of carbon atoms of the residue is from 4 to 25, preferably from 4 to 15. When A' is a bivalent perfluoroether residue, the number of carbon atoms of the residue is from 3 to 24, preferably from 3 to 14. The upper limit of the number of carbon atoms of each of A and A' is not particularly limited. From the standpoint of ease in synthesis and purification of A and A', the availability of a starting material and ease in handling, the bivalent group or residue having carbon atoms within the above-mentioned range is generally used, but an employable bivalent group or residue is not limited thereto. A and A' each may also be a bivalent perfluoropolyether residue containing a plurality of ether structures, wherein the number of ether structures is up to 10.

The terminal groups of a bifunctional HFPO oligomer represented by formula (XI) or formula (XXIV) are easily converted to nitrile groups via or not via ester groups.

The conversion of the terminal functional groups may be conducted by a method described in, for example, Japanese Patent Application Publication specification No. 53-5360 (corresponding to US Patent No 3,660,315). That is, an oligomer having ester groups at both terminals can be formed by reacting the terminal groups of the oligomer of formula (XI) or formula (XXIV) with an alcohol.

An oligomer having nitrile groups as terminal groups can be obtained as follows. An amide is synthesized by the reaction of the terminals of the oligomer of formula (XI) or formula (XXIV) with ammonia, or by the reaction of the oligomer having ester groups at both terminals, which is obtained by the above-mentioned method, with ammonia. The amide is then subjected to dehydration from the amide group using a dehydrating agent, such as diphosphorus pentaoxide.

As mentioned above, an HFPO oligomer represented by $R_{fo}(CN)_2$ [formula (II)] is derived from a bifunctional HFPO oligomer. When the bifunctional oligomer is synthesized by the polymerization of HFPO, by-production of a monofunctional oligomer represented by formula (XIII):

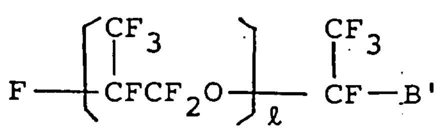

(XIII)

wherein, B' is

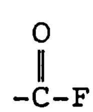

or $-CF_2OM$ (M is an alkali metal atom), and ℓ is a positive integer,
occurs in most cases.

Examples of alkali metals represented by M in the present invention include lithium, sodium, potassium, cesium and rubidium. Of these, preferred are potassium, cesium and rubidium, and more preferred is cesium.

When $R_{fo}(CN)_2$ to be used in the method according to the present invention contains a monofunctional oligomer having a nitrile group at its only one terminal, which is derived from the above-mentioned monofunctional oligomer, the polymerization for the PIA formation is likely to be terminated by the reaction with the monofunctional oligomer. Therefore, when the amount of the monofunctional oligomer in $R_{fo}(CN)_2$

is large, a high molecular weight PIA cannot be obtained.

Accordingly, with respect to the $R_{fo}(CN)_2$ to be used in the present invention, it is preferred that the molar ratio of the amount of the $R_{fo}(CN)_2$ relative to the total amount of the $R_{fo}(CN)_2$ and the monofunctional oligomer, that is, the bifunctionality of the $R_{fo}(CN)_2$, be at least 95 %.

When it is intended to synthesize a PIA having particularly high degree of polymerization, there is used an $R_{fo}(CN)_2$ having a bifunctionality of at least 98 %, preferably 99 % or more, and more preferably 99.5 % or more.

Synthesis of a high purity bifunctional HFPO oligomer, which is a starting material for a high purity HFPO dinitrile, is feasible by employing the following high precision polymerization method. That is, when the polymerization of HFPO is conducted under strictly controlled conditions using reaction materials, namely, an HFPO monomer, a bifunctional polymerization initiator, an ester group-containing monofunctional polymerization initiator and a solvent which have all been purified to an extremely high extent by a special process, the formation of the monofunctional oligomer is suppressed, so that preparation of a high purity bifunctional HFPO oligomer can be attained to some extent.

However, the above method has disadvantages in that the production cost becomes high and the by-production of a small amount of a monofunctional oligomer is generally inevitable. Therefore, it is preferable if a bifunctional HFPO oligomer having a high purity can be obtained by a simple operation from a crude bifunctional HFPO oligomer containing a small amount of a monofunctional oligomer, which can be easily synthesized.

Therefore, the present inventors have made extensive and intensive studies with a view toward obtaining a bifunctional HFPO oligomer having a high purity by a simple operation from a crude bifunctional HFPO oligomer containing a monofunctional oligomer. As a result, it has unexpectedly been found that when a crude bifunctional HFPO oligomer having a specific structure is subjected to distillation under specific conditions, a bifunctional HFPO oligomer having a high purity can be easily obtained.

That is, the present inventors have discovered the following method for obtaining a bifunctional hexafluoropropylene oxide oligomer dinitrile having a high bifunctional group purity. The method comprises:

(1) polymerizing hexafluoropropylene oxide by the use of a bifunctional polymerisation initiator represented by the following formula:

MO — A'' — OM

wherein A'' is a perfluoroalkylene group having from 2 to 20 carbon atoms which is unsubstituted or substituted, or a bivalent perfluoroether residue having from 4 to 25 carbon atoms which is unsubstituted or substituted, and M is an alkali metal atom,

to obtain a mixture of a bifunctional hexafluoropropylene oxide oligomer having a number average molecular weight of from 1,000 to 15,000 and represented by the following formula:

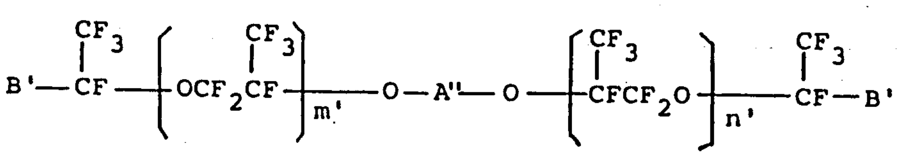 (XII)

wherein A'' is as defined above, m' and n' are each a positive integer, and B' is

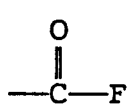

or $-CF_2OM$ where M is as defined above

and a monofunctional hexafluoropropylene oxide oligomer having a number average molecular weight of from 500 to 15,000 and represented by the following formula:

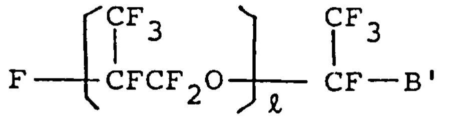 (XIII)

wherein B' is as defined above and $\ell$ is a positive integer,

(2) converting the terminal groups of the bifunctional and monofunctional hexafluoropropylene oxide oligomers to ester groups or nitrile groups,

(3) subjecting the resultant mixture to distillation under reduced pressure at a temperature of from 80 to 450 °C, so that 1 to 35 % by weight of the resultant mixture is removed as an initial stage distillation fraction,

wherein when the terminal groups of the bifunctional and monofunctional hexafluoropropylene oxide oligomers are converted to ester groups in step (2), the ester groups are converted to nitrile groups prior to step (3) or subsequent to step (3).

The HFPO oligomer dinitrile having a high purity obtained by the above-mentioned method can advantageously be used as a starting material for producing the above-mentioned polyimidoylamidine of formula (I) wherein $R_{fo}$ is a bivalent residue represented by formula (VIII-1).

The method for preparing the bifunctional HFPO oligomer represented by formula (XII) and the method for modifying the terminals thereof are the same as the method for preparing the bifunctional HFPO oligomer represented by formula (XI) and the method for modifying the terminals thereof, respectively.

The method for obtaining or purifying the above-mentioned bifunctional HFPO oligomer dinitrile having a high purity can be used not only for obtaining the bifunctional HFPO oligomer dinitrile, but also for purifying a bifunctional HFPO oligomer having a relatively high molecular weight which is useful as a starting material for various functional macromolecular materials.

The molecular weight of the bifunctional HFPO oligomer used in the above-mentioned purification method is not particularly limited, as long as the monofunctional HFPO oligomer, which is contained as an impurity, can be removed by distillation at a temperature of 450 °C or lower under reduced pressure. Generally, a bifunctional HFPO oligomer having a molecular weight of from 1,000 to 15,000, preferably from 2,000 to 12,000, more preferably from 3,500 to 10,000 in terms of a number average molecular weight is used in the purification method of the present invention.

When the molecular weight of the bifunctional HFPO oligomer is too small, a polymer prepared therefrom cannot effectively exhibit the properties of the HFPO polymer chain and, it is generally difficult to completely remove the monofunctional oligomer.

When the molecular weight of the bifunctional HFPO oligomer is too large, the amount of by-produced mono-functional HFPO oligomer is remarkably increased, so that it becomes difficult to obtain a high purity bifunctional HFPO oligomer from the mixture. Moreover, when the molecular weight is too large, it is necessary to conduct distillation by heating at a high temperature, leading to a disadvantage such that the polymer is likely to be decomposed.

In the purification method, the terminal groups of both the bifunctional HFPO oligomer represented by formula (XII) and the simultaneously by-produced mono-functional HFPO oligomer represented by formula (XIII) are converted to ester groups or nitrile groups in step (2), and then, the oligomers are separated by distillation in step (3). For obtaining a starting material for preparing the above-mentioned polyimidoylamidine, when the terminal groups of the above-mentioned bifunctional and monofunctional hexafluoropropylene oxide oligomers are converted to ester groups in step (2), the ester groups are converted to nitrile groups prior to step (3) or subsequent to step (3).

There is no particular limitation with respect to the type of alcohol to be used in the above-mentioned conversion to ester groups according to the present invention as long as the molecular weight of an alcohol is not too large and a produced ester is stable under distillation conditions. Generally, a lower hydrocarbon alcohol, such as methyl alcohol or ethyl alcohol, may be used. If desired, a hydrocarbon alcohol having a larger molecular weight, a fluorine-containing alcohol, thiol or the like may also be used.

The bifunctional HFPO oligomer of formula (XII) and the by-produced monofunctional HFPO oligomer of formula (XIII) to be used in the above-mentioned purification method, both of which have specific molecular weights and both of which have their terminal groups converted to ester groups or nitrile groups, surprisingly exhibit high distillation-separable properties and, therefore, they can be separated from each other by means of a distillation equipment of simple structure stably and effectively without causing the bifunctional HFPO oligomer to be decomposed.

With respect to the distillation equipment to be used in the purification method, when the oligomers have relatively low molecular weights, a conventional packed column type or a tray column type distillation equipment can be used, hut generally, it is advantageous to use a simple distillation equipment or a thin film type distillation equipment (or a molecular distillation equipment), such as Kugelrohr type or Arthur type distillation equipment. It is known that the simple distillation equipment or the thin film type distillation equipment (or the molecular distillation equipment) has a separating ability which corresponds to the number of theoretical plates of only about one. However, in the purification method of the present invention, using such a distillation equipment, the bifunctional HFPO oligomer can, unexpectedly, be effectively separated from the monofunctional HFPO oligomer which is expected to exhibit properties extremely similar to those of the bifunctional HFPO oligomer, which is surprising.

The distillation is generally conducted under reduced pressure. Although the degree of reduced pressure is varied depending on the molecular weight of the oligomer and the distillation temperature, the distillation is generally conducted under a pressure within the range of from 400 to $10^{-7}$ mmHg or from 100 to $10^{-6}$ mmHg, preferably within the range of from 30 to $10^{-5}$ mmHg. The higher the degree of vacuum, the lower the distillation temperature becomes, which is advantageous. However, it is difficult to employ an extremely high degree of vacuum when the distillation is conducted on a commercial scale. When the degree of vacuum is too low, the distillation temperature becomes high so that the decomposition of the oligomer takes place, which is disadvantageous.

The heating temperature for distillation is varied depending on the molecular weight of the oligomer and the degree of reduced pressure. The heating temperature which is generally used is within the range of from 80 to 450 °C, preferably from 100 to 400 °C. When the heating temperature is too high, the decomposition of the oligomer takes place. When the heating temperature is too low, the distillation of the oligomer becomes difficult.

In this purification method, when a crude bifunctional oligomer is subjected to distillation, a distillate which contains a large amount of monofunctional oligomer as an impurity is first obtained, so that a bifunctional oligomer which almost does not contain the monofunctional oligomer can be obtained as a residue. The bifunctional oligomer remaining as the residue may be subjected to further distillation for purification. Alternatively, the bifunctional oligomer as such may be used as a starting material for synthesizing a polymer without being subjected to further distillation.

The mole percent of bifunctional oligomer relative to the total number of moles of the bifunctional oligomer and the monofunctional oligomer present in the crude bifunctional oligomer is herein defined simply as "bifunctionality". The bifunctionality and the number average molecular weight $\overline{MW}n$ can easily be calculated from $^{19}$F-NMR spectrum data of the oligomer according to the method described in Journal of Macromolecular Science-Chemistry A8(3), 499, (1974).

With respect to the determination of the bifunctionality and the $\overline{MW}n$ from $^{19}$F-NMR spectrum, the higher the resolution of $^{19}$F-NMR spectrum, the more accurately the determination can be conducted.

In the present invention, a high resolution nuclear magnetic resonance absorption spectrometer JNM-FX-600 manufactured by JEOL Ltd., Japan ($^{19}$F observation frequency: 187.736 MHz) is used. By means of this equipment, the bifunctionality and the $\overline{MW}n$ can be determined with sufficient accuracy.

In the distillation operation in the above-mentioned purification method, the amount of initial stage distillation fraction required for removing the monofunctional oligomer depends upon the bifunctionality of the crude bifunctional oligomer and the desired bifunctionality of the purified bifunctional oligomer. In general, however, when distillation is conducted until 1 to 35 % by weight, preferably 3 to 35 % by weight, more preferably 5 to 30 % by weight, most preferably 5 to 25 % by weight based on the amount of the crude bifunctional oligomer is removed as an initial stage distillation fraction, a bifunctional HFPO oligomer having a high purity can be obtained.

The bifunctionality of the high purity bifunctional oligomer obtained by the above-mentioned purification method varies depending on the bifunctionality of the crude bifunctional oligomer used and the amount of the initial stage distillation fraction removed. However, the bifunctionality of at least 95 % by mole can easily be obtained. It is also possible to obtain a bifunctional oligomer having a bifunctionality of 98 % by mole or more, 99 % by mole or more, and more preferably 99.5 % by mole or more.

As mentioned above, an $R_{fo}(CN)_2$ having a high bifunctionality can be obtained by the high precision polymerization method or by the above-mentioned purification method in which a monofunctional oligomer is removed by distillation. However, in some cases, a very small amount of a polar impurity is present in the $R_{fo}(CN)_2$.

Examples of polar impurities include polar substances, such as water, an inorganic acid, an inorganic salt, an oligomer having a carboxyl group or a carboxylate group as a terminal group, an oligomer having-an amide group as a terminal group, and a colorant. It is preferred that these polar impurities be removed

because the polar impurities inhibit the formation of the high molecular weight polyimidoylamidine of the present invention.

As an advantageous method for removing these polar materials, there may be mentioned a method in which the bifunctional oligomer (ester or nitrile) obtained by the high precision polymerization method, the crude bifunctional oligomer (before being subjected to purification by distillation according to the above-mentioned purification method for the bifunctional oligomer), or the distillation-purified bifunctional oligomer, is treated with an adsorbent for a polar material, such as silica gel, activated alumina, silica alumina, activated clay, molecular sieve, zeolite and active carbon. For conducting the treatment, several methods can be employed. Generally, a column treatment method in which an oligomer solution is passed through a column packed with an adsorbent is advantageously used. As a solvent for the oligomer, various fluoride-containing solvents may be used. For example, there may be used a chlorofluorocarbon type solvent, such as 1,1,2-trichloro-1,2,2-trifluoroethane; a perfluorocarbon type solvent, such as perfluorohexane or perfluorooctane; a fluorine-containing ether type solvent, such as 2H-tetradecafluoro-5-(trifluoro methyl)-3,6-dioxanonane or perfluoro-2-butyltetrahydrofuran; or a perfluoroamine type solvent, such as perfluorotributylamine. Of these, the chlorofluorocarbon type solvent is advantageous from the viewpoint of cost and availability. On the other hand, the perfluorocarbon type solvent, the perfluoroamine type solvent and the fluorine-containing ether type solvent are advantageous in that a high degree of purification can be attained.

The HFPO oligomer dinitrile $R_{fo}(CN)_2$ [formula (II)], which is to be used in the method of the present invention for preparing a polyimidoylamidine, has a molecular weight of from 1 x $10^3$ to 5 x $10^4$.

Generally, there is used an HFPO oligomer dinitrile having a number average molecular weight of 1,000 or more, preferably 1,500 or more, and more preferably 2,000 or more. When the bifunctionality of the oligomer dinitrile is high, it is particularly preferred to use $R_{fo}(CN)_2$ having a number average molecular weight of 3,500 or more. When the number average molecular weight of $R_{fo}(CN)_2$ is 1,000 or less, it is difficult to obtain a high molecular weight PIA, although the reason therefor has not been elucidated.

The upper limit of the molecular weight of $R_{fo}(CN)_2$ which is to be used in the method of the present invention is not particularly restricted, and $R_{fo}(CN)_2$'s having various molecular weights may be used. However, when the molecular weight is too high, it becomes difficult to prepare and purify an $R_{fo}(CN)_2$ having a high bifunctionality. Therefore, from the viewpoint of the facility in obtaining an $R_{fo}(CN)_2$ having a high bifunctionality, the number average molecular weight of the $R_{fo}(CN)_2$ is generally not greater than 5 x $10^4$, preferably not greater than 3 x $10^4$, more preferably not greater than 1.5 x $10^4$, most preferably not greater than 1.2 x $10^4$.

Therefore, the value of m + n in formulae (I) and (II), which depends upon the value of A, is generally from 4 to 300, preferably from 4 to 200, more preferably from 4 to 100, most preferably from 4 to 70, which corresponds to the molecular weight of $R_{fo}(CN)_2$.

Preparation of a PIA for use in the present invention is conducted by the following steps (a) and (b) using as a starting material an $R_{fo}(CN)_2$ having a number average molecular weight of from 1 x $10^3$ to 5 x $10^4$ and having a bifunctionality of at least 95 mole%.

(a) Reaction between $R_{fo}(CN)_2$ and ammonia:

An $R_{fo}(CN)_2$ is reacted with ammonia in a molar ratio of the ammonia to the $R_{fo}(CN)_2$ of at least 5, to thereby obtain a reaction product comprised mainly of an oligomer having terminal amidine groups converted from the nitrile groups.

The $^{19}$F-NNR spectrum of the product shows that by the reaction, functional groups other than amidine groups are also produced in a small amount. However, the product as such may be used for the subsequent reaction with an $R_{fo}(CN)_2$ in step (b). Conversion of nitrile groups to amidine groups can easily be confirmed by an infrared adsorption spectroscopy. That is, the nitrile groups of the $R_{fo}(CN)_2$ exhibit a characteristic absorption at 2,260 $cm^{-1}$, whereas the amidine groups exhibit a characteristic absorption at 1,695 $cm^{-1}$. Therefore, the degree of advance of the reaction may readily be confirmed by observing the change in the peak intensity. In step (a), the reaction is advanced until the nitrile groups are not detected.

The reaction temperature is generally from -80 °C to 70 °C, preferably from -50 °C to 50 °C. When the reaction temperature is too low, a sufficient reaction rate cannot be obtained. On the other hand, when the reaction temperature is too high, the reaction operation becomes difficult because the vapor pressure of ammonia becomes high.

The reaction time is generally from 1 minute to 100 hours, but the reaction may be conducted for a period of more than 100 hours.

The $R_{fo}(CN)_2$ is reacted with ammonia in a molar ratio of the ammonia to the $R_{fo}(CN)_2$ of at least 5, preferably in a molar ratio as large as at least 10.

When the molar ratio of the ammonia to the $R_{fo}(CN)_2$ is less than 5, the yield of the amidine-forming reaction becomes low, which is disadvantageous.

The reaction between the $R_{fo}(CN)_2$ and ammonia may be conducted in various types of atmosphere. For example, the $R_{fo}(CN)_2$ may be reacted with a liquefied ammonia or a gaseous ammonia. However, when the gaseous ammonia is used, it is preferred that the partial pressure of the ammonia be as high as possible, for example, the reaction be conducted under a super-atmospheric pressure.

Moreover, a method in which the $R_{fo}(CN)_2$ is reacted with ammonia dissolved in a solvent is suitable for the present invention. With respect to the solvent to be used, there is no particular limitation, as long as the solvent is inert to ammonia used and amidine produced. A solvent for which $R_{fo}(CN)_2$ and ammonia have a high solubility is preferred from the standpoint of ease in the reaction operation.

Examples of solvents to be used in the present invention include an ether type solvent, such as diethyl ether and tetrahydrofuran; a hydrocarbon type solvent, such as cyclohexane, octane and toluene; a chlorine type solvent, such as dichloroethane and dichloromethane, and a fluorine type solvent containing a fluorine atom. The fluorine type solvent or a mixed solvent containing the fluorine type solvent is particularly preferred because ammonia and $R_{fo}(CN)_2$ have a high solubility for such a solvent.

Examples of fluorine type solvents to be used for the reaction include a chlorofluorocarbon type solvent, such as 1,1,2-trichloro-1,2,2-trifluoroethane (hereinafter referred to simply as "F-113"); a perfluorocarbon type solvent, such as perfluorohexane or perfluorooctane; a fluorine-containing ether type solvent, such as perfluoro-2-butyl-tetrahydrofuran or 2H-tetradecafluoro-5-(trifluoromethyl)-3,6-dioxanonane; and a perfluoroamine type solvent, such as perfluorotributylamine.

When the reaction between $R_{fo}(CN)_2$ and ammonia is conducted at the temperature of lower than -33 °C, which corresponds to the boiling point of ammonia, a pressure vessel is not particularly required. However, when the reaction temperature is -33 °C or higher, it is preferred to use a pressure vessel. On the other hand, when a fluorine type solvent is used, the pressure vessel is not necessarily used even at a reaction temperature of -33 °C or higher. However, even in such a case, it is preferred that the reaction be conducted in a pressure vessel under high ammonia concentration conditions.

(b) Reaction between the reaction product in step (a) and $R_{fo}(CN)_2$:

The present inventors have studied in detail with respect to the reaction conditions with a view toward obtaining a high molecular weight PIA by the reaction between the reaction product in step (a) and an $R_{fo}(CN)_2$. As a result, it has unexpectedly been found that when the reaction product obtained in step (a) is reacted with an $R_{fo}(CN)_2$ in a molar ratio of from 0.60 to 0.99 relative to the $R_{fo}(CN)_2$ used in step (a), a PIA having a molecular weight in the wide range of from a relatively low molecular weight to a high molecular weight, can be produced with high reproducibility. When the $R_{fo}(CN)_2$'s to be used in steps (a) and (b) are designated "$R_{fo}(CN)_2$ ($\alpha$)" and "$R_{fo}(CN)_2$ ($\beta$)", respectively, $R_{fo}(CN)_2$ ($\alpha$) and $R_{fo}(CN)_2$ ($\beta$) may be the same or different.

As described above, side reaction products having groups other than amidine groups are contained in the reaction product in step (a). In spite of this, a high molecular weight PIA is produced when the reaction is conducted in the above-mentioned molar ratio, which is unexpected. As described above, this has for the first time been attained by reacting the product which has been obtained by reacting an $R_{fo}(CN)_2$ having a specific molecular weight and a specific purity or bifunctionality with ammonia under specific conditions, with an $R_{fo}(CN)_2$ in a specific molar ratio.

In other words, the present invention has for the first time become feasible, based on the successful development of purification technique and accurate analysis of $R_{fo}(CN)_2$ and the detailed investigation of the reaction conditions.

In the conventional synthesis methods of PIA, not only the bifunctionality of $R_{fo}(CN)_2$ to he used for the reaction but also the molar ratio of the ammonia-treated $R_{fo}(CN)_2$ to an untreated $R_{fo}(CN)_2$ have not been taken into account at all.

The reaction for forming a PIA for use in the present invention can be conducted in the presence or absence of a solvent.

There is no particular limitation with respect to the solvent to be used in the reaction, as long as the solvent is an inert solvent capable of dissolving a product of the reaction between $R_{fo}(CN)_2$ and ammonia as well as the $R_{fo}(CN)_2$.

Examples of solvents include a chlorofluorocarbon type solvent, such as 1,1,2-trichloro-1,2,2-trifluoroethane; a perfluorocarbon type solvent, such as perfluorohexane or perfluorooctane; a fluorine-containing ether type solvent, such as perfluoro-2-butyl-tetrahydrofuran or 2H-tetradecafluoro-5-(trifluoromethyl)-3,6-dioxanonane; and a perfluoroamine type solvent, such as perfluorotributylamine.

The reaction temperature of the reaction for forming PIA in step (b) is generally from -80 to 90 °C, preferably from -50 to 70 °C. When the reaction temperature is too low, a sufficient reaction rate cannot be obtained. On the other hand, when the reaction temperature is too high, not only decomposition of amidine groups but also triazine ring forming reaction is likely to occur, which is disadvantageous.

The degree of advance of the PIA forming reaction in step (b) can be determined by measuring the infrared absorption spectrum of a reaction product or by determining the viscosity thereof.

That is, in the infrared adsorption spectroscopy, the imidoilamidine groups exhibit characteristic absorption peaks at 1,600 $cm^{-1}$ and 1,660 $cm^{-1}$. From the ratio of the intensities of these characteristic absorption peaks to the intensity of a peak at 2,260 $cm^{-1}$ attributable to nitrile groups or the intensity of a peak at 1,695 $cm^{-1}$ attributable to amidine groups, the degree of polymerization can be determined.

By the PIA forming reaction in step (b), a desired high molecular weight compound can generally be obtained within a period of time of from 1 minute to 100 hours, but the reaction time may be more than 100 hours.

Moreover, the degree of polymerization can be determined by the viscosity of a reaction product. R.W. Rosser et al. have reported that there is a linear relationship between the viscosity of the PIA and the weight average molecular weight of the polytriazine, which is prepared from the PIA, as measured by gel permeation chromatography [Journal of Polymer Science, Polymer Letters Edition, 18, p135 (1980), Industrial Engineering Chemistry, Product Research Development, 20, p694 (1981) and the specification of U.S. Patent No. 4,242,498]. These reports of Rosser et al. show that 0.095 dl/g, which is a maximum value among the in trinsic viscosity values of the PIA's as measured in F-113 at 30 °C, corresponds to the weight average molecular weight of 2.8 x $10^4$ of a polytriazine converted from the PIA by trifluoroacetic anhydride.

These values of intrinsic viscosity and weight average molecular weight of PIA are maximum among those which have heretofore been reported in literatures and patents, insofar as the present inventors have known.

In the preparation method of PIA as used in the present invention, when the number of moles of $R_{fo}$-$(CN)_2$ used for the reaction with ammonia is expressed by $M_1$ and the number of moles of $R_{fo}(CN)_2$ to be reacted with the reaction product of the above reaction with ammonia is expressed by $M_2$, the molecular weight of PIA formed depends upon the ratio of $M_2/M_1$. When the ratio of $M_2/M_1$ is selected within the range of from 0.60 to 0.99, preferably from 0.70 to 0.98, more preferably from 0.75 to 0.96, there can be easily obtained not only a PIA having an intrinsic viscosity of 0.02 dl/g or more, for example, 0.05 dl/g, as measured in F-113 at 30 °C, which has conventionally been obtained, but also a PIA having an intrinsic viscosity as high as from 0.10 to 0.30 dl/g or from 0.12 to 0.40 dl/g as measured in F-113 at 30 °C, which has never conventionally been obtained.

When the molecular weight becomes particularly high, the solubility in F-113 becomes low at a temperature of 30 °C. However, a PIA having an intrinsic viscosity of from 0.30 to 0.60 dl/g as measured at 35 or 40 °C in perfluorohexane, perfluorooxtane or F-113 can be obtained. In addition, a super high molecular weight PIA having an intrinsic viscosity of from 0.40 to 0.60 dl/g, or 0.60 dl/g or more as measured in 2H-tetradecafluoro-5-(trifluoromethyl)-3,6-dioxanonane at 50 °C can also be obtained.

The HFPO type PIA obtained by this method exhibits different appearances according to the molecular weight thereof, as follows.

A PIA having an intrinsic viscosity of from 0.02 to 0.10 dl/g is a viscous polymer having fluidity. A PIA having an intrinsic viscosity of from 0.10 to 0.15 dl/g, more particularly from 0.12 to 0.15 dl/g is a waxy substance. A PIA having an intrinsic viscosity of from 0.15 to 0.25 dl/g is a semisolid substance having a slight elasticity. A PIA having an intrinsic viscosity of greater than 0.25 dl/g is an elastic, solid.

A PIA having an intrinsic viscosity of 0.05 dl/g corresponds to that having a viscosity average molecular weight ($\overline{Mv}$) of 3.5 x $10^4$. A PIA having an intrinsic viscosity of 0.10 dl/g corresponds to that having an $\overline{Mv}$ of 1 x $10^5$. A PIA having an intrinsic viscosity of 0.15 dl/g corresponds to that having an $\overline{Mv}$ of 2 x $10^5$. A PIA having an intrinsic viscosity of 0.30 dl/g corresponds to that having an $\overline{Mv}$ of about 8 x $10^5$. A PIA having an intrinsic viscosity of 0.50 dl/g corresponds to that having an $\overline{Mv}$ of about 2 x $10^6$. A PIA having an intrinsic viscosity of 0.60 dl/g corresponds to that having an $\overline{Mv}$ of about 2.6 x $10^6$.

As described above, the PIA having a maximum molecular weight among the HFPO type PIA's which have heretofore been reported is a viscous polymer having fluidity, which has an intrinsic viscosity of only 0.095 dl/g. Therefore, the high molecular weight PIA prepared herein which has an intrinsic viscosity of 0.10 dl/g or more, preferably 0.12 dl/g or more and which is a waxy substance, a semisolid substance having a slight elasticity or an elastic, solid substance, is a novel, high molecular weight perfluoropolyether material.

As described above, in the PIA synthesis reaction, the molecular weight of the PIA can be regulated by changing the molecular weight and purity of the $R_{fo}(CN)_2$, the reaction conditions for the reaction between $R_{fo}(CN)_2$ and ammonia, and the ratio of $M_2/M_1$. Particularly, by changing the ratio of $M_2/M_1$, a PIA having a desired molecular weight within the wide range can be prepared with high reproducibility. This characteristic is extremely important from a commercial point of view.

On the other hand, with respect to the conventional methods for preparing the HFPO type PIA, it is noted that even by either a method in which the $R_{fo}(CN)_2$ is reacted with ammonia gas or a method in which the molecular weight is successively increased, a PIA having a high molecular weight cannot be obtained. In addition, the reproducibility is poor and the operation is troublesome. Therefore, the conventional methods are not advantageous from the economic point of view.

Therefore, the above method for preparing an HFPO type PIA is not only advantageous for preparing a high molecular weight PIA which has not conventionally been obtained, but also extremely important from a commercial point of view for preparing PIA's having desired various molecular weights by an easy operation with high reproducibility.

The novel high molecular weight PIA thus prepared can be converted to a high molecular weight polytriazine, which comprises recurring units of formula (III), by reacting the PIA with various acylating agents in the same manner as in the reaction of the conventional PIA having a relatively low molecular weight.

As the acylating agent to be used, there may be mentioned an acylating agent capable of forming a triazine ring to which a perfluoroalkylene group

$$R_{f_1}$$

or a perfluoroether group

$$R_{fo_1}$$

is bonded. Examples of acylating agents include an acid fluoride, such as

$$R_{f_1}COF$$

and

$$R_{fo_1}COF;$$

an acid chloride, such as

$$R_{f_1}COCl$$

and

$$R_{fo_1}COCl;$$

an acid anhydride, such as

$$(R_{f_1}CO)_2O$$

and

$$(R_{fo_1}CO)_2O;$$

and a cyclic perfluoro acid anhydride. However, the acylating agent is not limited to the above-mentioned examples.

Herein,

$$R_{f_1}$$

is a perfluoroalkyl group having from 1 to 15 carbon atoms, preferably from 1 to 11 carbon atoms, more preferably from 1 to 7 carbon atoms, and

$$R_{fo_1}$$

is a perfluoroether group having from 2 to 100 carbon atoms, preferably from 2 to 40 carbon atoms, more preferably 2 to 20 carbon atoms. The perfluoroether group mentioned herein is defined as including a perfluoropolyether group.

$$R_{f_1}$$

and

$$R_{fo_1}$$

correspond to R of formula (III). The fluorine atoms of each of R,

$$R_{f_1}$$

and

$$R_{fo_1}$$

may be substituted with a substituent group which is inert under the conditions for the formation of a triazine ring, such as a hydrogen atom, a chlorine atom, a bromine atom, an iodine atom, a nitrile group and an ester group, in a ratio of not greater than 30 % of the total number of fluorine atoms of the unsubstituted R,

$$R_{f_1}$$

or

$$R_{fo_1}.$$

When a fluorine type cyclic acid anhydride is employed as an acylating agent, substituent R containing a carboxyl group is formed.

Accordingly, in still a further aspect of the present invention, there is provided a method for preparing a polytriazine comprising recurring units of formula (III) and having an intrinsic viscosity of from 0.308 to 0.65 dl/g. This method comprises reacting a polyimidoylamidine comprising recurring units of formula (I) and having an intrinsic viscosity of from 0.12 to 0.60 dl/g, with an acylating agent containing or capable of forming substituent R, where R has the same meaning as defined for formula (III).

Examples of acylating agents to be used in the method of the present invention include those represented by the formulae:

$CF_3COF$, $CF_3COC\ell$, $(CF_3CO)_2O$, $CF_3CF_2COF$, $CF_3CF_2COC\ell$, $(CF_3CF_2CO)_2O$,

$$CF_3\text{-}(CF_2)_a\text{-}COC\ell \; (a=2\sim14),$$

$HCF_2CF_2COC\ell$,

$$H\text{-}(CF_2)_4\text{-}COC\ell,\; H\text{-}(CF_2)_6\text{-}COC\ell,$$

$$H\text{-}(CF_2)_8\text{-}COC\ell,\; H\text{-}(CF_2)_{10}\text{-}COC\ell,$$

$(CF_3CF_2CO)_2O$,

$$[CF_3\text{-}(CF_2)_6\text{-}CO]_2O,$$

$(CF_3CF_2CF_2CO)_2O$,

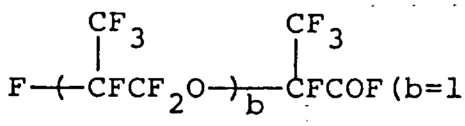 (b=1~30),

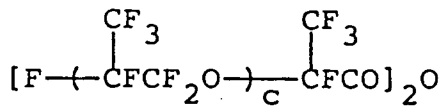 (c=1~10),

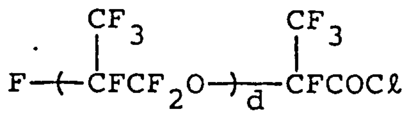 (d=1~30),

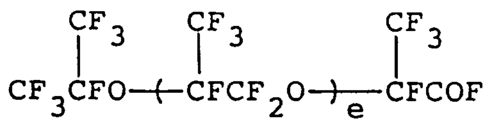 (e=1~30),

$ICF_2CF_2O\text{-}(\text{-}CF_2\text{-})_5\text{-}OCFCF_3COF$ ,

$EtO_2CCF_2CF_2CF_2COF$,

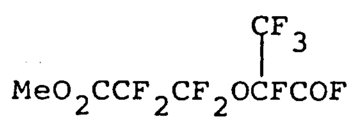 ,

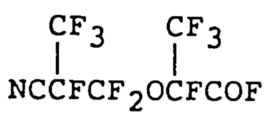, and 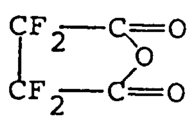,

but acylating agents usable in the present invention are not limited to these examples.

Conversion of the PIA to a polytriazine by means of these acylating agents may be conducted under the same conditions as in the case of the conversion of the conventional low molecular weight PIA to a polytriazine corresponding thereto. For example, as described in the Journal of Polymer Science, Polymer Letters Edition, Vol. 20, p.467 (1982); U.S. Patent No. 4,242,498; and the Journal of Polymer Science, Polymer Letters Edition, Vol. 18, p.135 (1980), a polytriazine can readily be obtained by reacting a PIA with an acylating agent in a fluorine-containing solvent. Alternatively, the reaction may be effected in the absence of a solvent.

The acylating agent is used in a molar ratio of at least 2, preferably 4 or more relative to the imidoylamidine group of the polyimidoylamidine. There is no particular upper limit for the molar ratio of the acylating agent relative to the imidoylamidine group, but, in general, the acylating agent is used in a molar ratio of not greater than about 100 from the viewpoint of cost and ease in operation.

The HFPO type polytriazine obtained as described above exhibits a sharp characteristic band at 1550 $cm^{-1}$ in an infrared absorption spectrum.

The intrinsic viscosity of the polytriazine depends on the types of the PIA and acylating agent employed, and there can be attained intrinsic viscosities in a wide range. That is, polytriazines having intrinsic viscosities in a wide range of from the range of 0.02 dl/g-0.12 dl/g (relatively low molecular weight polytriazine) through the range of 0.12 dl/g-0.65 dl/g or 0.15 dl/g-0.65 dl/g, or higher (high molecular weight polytriazine) can be obtained. The measurement of the intrinsic viscosity of the polytriazine is conducted under the same conditions as in the case of the PIA.

When the molecular weight of

$$R_{fo_1}$$

or

$$R_{f_1}$$

is 1000 or less, the relationship between the intrinsic viscosity and the viscosity average molecular weight of the PTR is almost the same as the relationship between the intrinsic viscosity and the viscosity average molecular weight of the PIA.

Unless otherwise specified, with respect to the intrinsic viscosities of the PIA and PTR, a value which is less than 0.20 is obtained by the measurement in F-113 at 30 °C, and a value which is 0.20 or more is obtained by the measurement in perfluorohexane at 40 °C.

The intrinsic viscosities of the PIA and PTR can be measured by means of Cannon-Ubbelohde viscometer, Ostwald viscometer or the like.

When the terminal groups of the PIA comprising recurring units of formula (I) are represented by X and Y, the whole structure of the PIA is represented by formula (XIV):

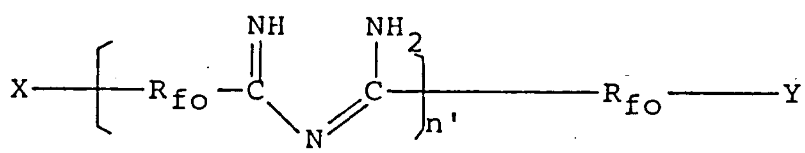
(XIV)

wherein $R_{fo}$ has the same meaning as defined for formula (I), X and Y each represent a terminal group and n' is a positive integer.

The structures of the terminal groups X and Y depend mainly on the reaction conditions for the synthesis of the PIA and the bifunctionality of $R_{fo}(CN)_2$.

It is believed that when the purity of $R_{fo}(CN)_2$ is high and the synthesis of the PIA is conducted under completely dry conditions, X and Y are each comprised mainly of a nitrile group (-CN) or an amidine group

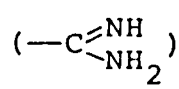 .

Whether X and Y comprise only nitrile groups or only amidine groups, or a mixture thereof, depends on the reaction conditions for the synthesis of the PIA. For example, the structures of X and Y depend on the reaction conditions and the proportions of the feedstocks employed in step (a) and step (b) of the present method for preparing a PIA. In general, when the amount of $R_{fo}(CN)_2$ used in step (b) is larger than that of the $R_{fo}(CN)_2$ which is necessary for forming a PIA having a maximum molecular weight, the amount of the nitrile group-terminated structure becomes larger than that of the amidine group-terminated structure, whereas when the amount of $R_{fo}(CN)_2$ used in step (b) is smaller, the amount of the amidine group-terminated structure becomes larger than that of the nitrile group-terminated structure.

Further, it is believed that when $R_{fo}(CN)_2$ contains a monofunctional oligomer represented by formula (XV):

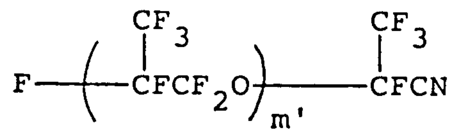

(XV)

wherein m' represents a positive integer, all or a portion of each of groups X and Y are comprised of a terminal structure represented by formula (XVI):

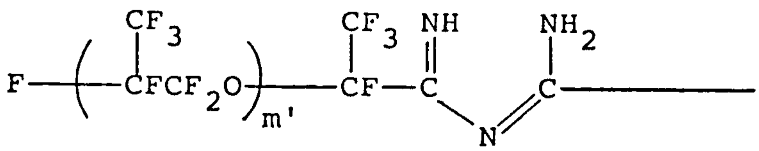

(XVI)

wherein m' has the same meaning as defined for formula (XV).

Further, it is believed that when the reaction system for the synthesis of the PIA contains an HFPO oligomer containing polar terminal groups, such as an amide group, a carboxyl group and a carboxylate group, or low molecular weight polar substances, such as water and an inorganic acid, a polar group-terminated structure which is inert to the polymerization growth of the PIA is formed by the reaction of the oligomer containing polar terminal groups and the low molecular weight polar substances with the terminal nitrile groups and terminal amidine groups of the PIA.

As examples of the terminal structure of the PTR which is formed by the above-mentioned reaction of the PIA with an acylating agent, there may be mentioned ① a nitrile group-terminated structure, ② a polar group-terminated structure formed by the reaction of terminal amidine groups with an acylating agent or by the reaction of terminal amidine groups with an acidic substance derived from the acylating agent, ③ a terminal structure represented by formula (XVII):

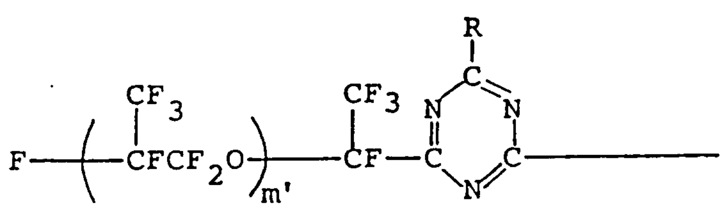

(XVII)

wherein m' has the same meaning as defined for formula (XV) and R has the same meaning as defined for formula (III),

and ④ a polar group-terminated structure derived from polar impurities.

When the synthesis of the PIA and in turn the synthesis of PTR are conducted under dry conditions using $R_{fo}(CN)_2$ having a high purity, the formation of terminal structures ③ and ④ mentioned above in the resultant PTR can be suppressed. However, according to the methods for preparing a PIA and a PTR according to the present invention, it is impossible to avoid the formation of terminal groups ① and/or ② in the resultant PTR.

The PTR of the present invention generally has a high heat stability, so that not only is there almost no decomposition of the PTR at a temperature of up to about 300 °C even in air, but also the PTR is stable at a temperature of up to 350 °C in an inert gas atmosphere. However, at a temperature of 310 °C or more in air, a slight weight decrease is observed, which suggests that the PTR is partially decomposed. The reason for the occurrence of heat decomposition is believed to reside in that the heat stability of the above-mentioned terminal structures ① and ② is unsatisfactory and, hence, heat decomposition advances from the terminals. Therefore, the present inventors have made studies with a view toward developing a method for imparting the terminals with high stability.

As a result, it has been found that the terminal structure of the PTR can be stabilized and improved in heat resistance by employing process (A) and/or process (B).

Process (A)

The case where there is employed, as a starting material, the PIA (XIV-1) which corresponds to formula (XIV) where X and Y are each CN:

Both terminal nitrile groups are converted to imidoylamidine groups by the following reaction, and then reacted with an acylating agent, to thereby obtain a stabilized PTR.

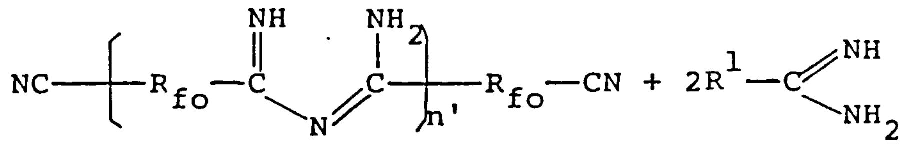

(XIV-1) (XIX-2)

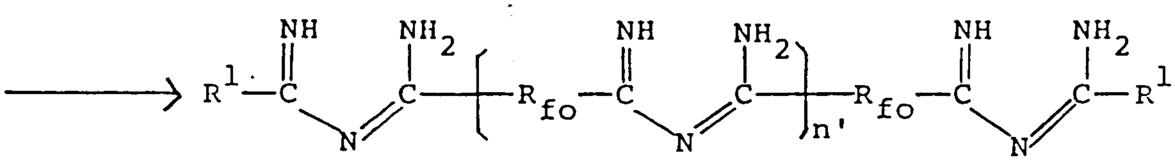

(XX)

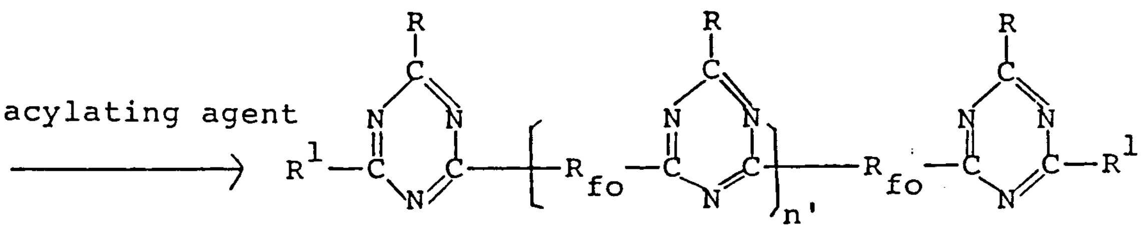


(XXI)

wherein R of formula (XXI) has the same meaning as defined for formula (III).

The amidine compound of formula (XIX-2) employed in the above reaction can readily be obtained by the following reaction:

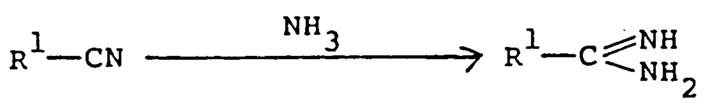


(XIX-1) (XIX-2)

wherein $R^1$ of each of formulae (XIX-1) and (XIX-2) has the same meaning as defined for formula (III), exclusive of those which are substituted with a nitrile group, an ester group or a carboxyl group.

The polyimidoylamidine of formula (XIV-1) having both terminal groups comprised of nitrile groups, which is the starting material of the above reaction, can be obtained by increasing the amount of $R_{fo}(CN)_2$ to be used in step (b) of the synthesis method of the PIA.

In process (A), the amidine compound of formula (XIX-2) is used in a molar ratio of at least 2, preferably 4 or more relative to the polyimidoylamidine of formula (XIV-1). There is no particular upper limit for the molar ratio of the amidine compound, but, in general, the amidine compound is used in a molar ratio of not

greater than about 100 from the viewpoint of cost and ease in operation.

The amount of the acylating agent is as described before.

Process (B)

The case where there is employed, as a starting material, the PIA (XIV-2) which corresponds to formula (XIV) where X and Y are each an amidine group:

Both terminal amidine groups are converted to imidoylamidine groups by the following reaction, and then reacted with an acylating agent, to thereby obtain a stabilized PTR.

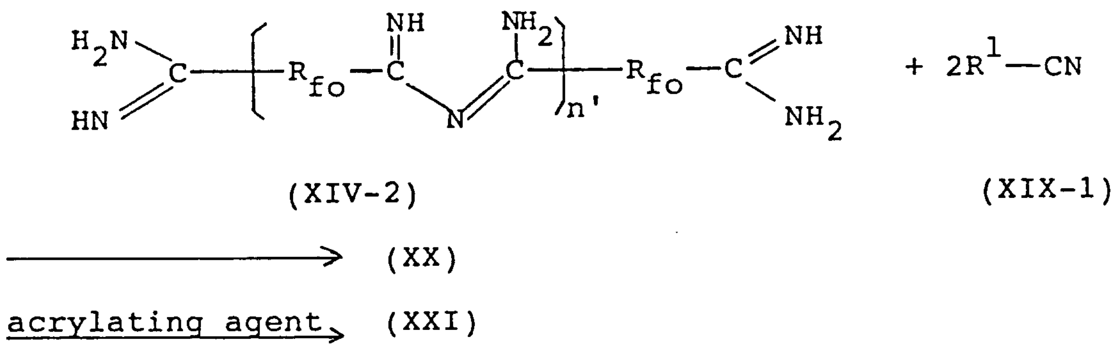


(XIV-2) (XIX-1)

(XX)

(XXI)

PIA (i) of formula (XIV-2) can be obtained by decreasing the amount of $R_{fo}(CN)_2$ to be used in step (b) of the method for the PIA synthesis, or by treating, with ammonia, PIA (ii) of formula (XIV-1) which corresponds to formula (XIV) where X and Y are each a nitrile group or PIA (iii) which corresponds to formula (XIV) where X and Y are respectively a nitrile group and an amidine group, or a mixture (iii) of PIA's (ii) and (iii).

In process (B), the nitrile compound of formula (XIX-1) is used in a molar ratio of at least 2, preferably 4 or more relative to the polyimidoylamidine. There is no particular upper limit for the molar ratio of the nitrile compound relative to the polyimidoylamidine, but, in general, the nitrile compound is used in a molar ratio of not greater than about 100 from the viewpoint of cost and ease in operation.

The amount of the acylating agent is as described above.

With respect to the terminal-stabilized PTR (XXI) obtained by process (A) or process (B) described above, when R and R' contain no polar groups, substantially no decomposition is observed at a temperature of up to about 370 °C in an inert gas atmosphere, and substantially no decomposition is observed at a temperature of up to about 340 °C even in air.

Beside process (A) and process (B) being useful as a process for the synthesis of a terminal-stabilized PTR, for example, of formula (XXI), there can be mentioned a process in which, as a starting material, a mixture of $R_{fo}(CN)_2$ with a small amount of a monofunctional oligomer, for example, of formula (XV) or with a small amount of a monofunctional nitrile compound, for example, of formula (XIX-1), is used to thereby intentionally produce inert terminals, and the resultant PIA is then converted to a PTR having inert terminals, for example, of formula (XXI).

Also, it is possible to convert a nitrile group-terminated PTR to a terminal-stabilized PTR in the same manner as in the process for the terminal stabilization by the conversion of the nitrile group-terminated PIA (XIX-1) to (XXI).

The viscosity of the terminal-stabilized PTR represented by formula (XXI) is not significantly different from that of the terminal-nonstabilized PTR, except in the case where terminal group $R^1$ has a particularly large molecular weight.

The present inventors have discovered various novel applications for PIA and PTR. Hereinbelow, those applications will be described.

A PTR having of this invention is useful as a viscosity modifier for a fluoro-oil, such as a perfluoropolyether, and a fluoro-grease. Further, a PTR of this invention is useful as a lubricant for a magnetic recording material. Moreover, the PTR is useful as a sealant material, because it substantially does not exhibit any fluidity at about room temperature. Further, because it has high solvent resistance and chemical resistance as described above, the PTR is useful as a high stability sealant material having corrosion resistance and solvent resistance.

When a PTR (one whose terminals have not been stabilized), is heated at a temperature of from 150° to 400 °C, preferably from 200° to 350 °C, in the presence of a catalyst for a triazine ring forming reaction, such as ammonia and tetraphenyltin, a crosslinked polymer which has elasticity and is insoluble in fluoro-solvents is obtained. The resultant crosslinked polymer is useful as a sealant material having not only corrosion resistance and heat resistance but also solvent resistance.

Best Mode for Carrying Out the Invention

Hereinbelow, the present invention will be illustrated with reference to Examples, which however should not be construed as limiting the present invention.

[Synthesis of $R_{fo}(CN)_2$]

Hereinbelow, examples of methods for synthesizing various types of $R_{fo}(CN)_2$ to be used for the syntheses of a PIA, and then a PTR according to the present invention will be described, which however should not be construed as limiting the method of synthesizing $R_{fo}(CN)_2$ to be employed in the present invention.

Synthetic Example 1

According to the HFPO polymerization method described in Japanese Patent Application Publication Specification No. 53-5360, the HFPO purification method described in Japanese Patent Application Laid-Open Specification No. 57-175185 and the polymer terminal group conversion method described in U.S. Patent No. 3,317,484, wherein slight modification was effected, 223 g of a crude $R_{fo}(CN)_2$ having a number average molecular weight of about 2,000 was synthesized using a polymerization initiator of the formula:

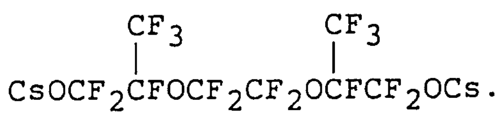

The crude $R_{fo}(CN)_2$ was purified by column chromatography using 150 g of 200 mesh activated alumina and using pefluorohexane as a developing solvent. As a result, 222 g of a colorless, transparent viscous liquid was obtained.

The resultant crude $R_{fo}(CN)_2$ was subjected to analysis by means of $^{19}F$-NMR spectroscopy. As a result, it was found that the number average molecular weight ($\overline{Mw}n$) was about 2,010 and the bifunctionality was 97.7 mol%.

56.2 g of crude $R_{fo}(CN)_2$ was purified by distillation using a Kugelrohr-type thin film distillation apparatus at a pressure of about 0.1 mmHg.

9.8 g of initial stage distillation fraction having been distilled off at a heating temperature of 150 °C was removed, and 10.2 g of second stage distillation fraction having been distilled off at a heating temperature of 160°-170 °C, 22.8 g of third stage distillation fraction having been distilled off at a heating temperature of 170°-180 °C and 10.6 g of fourth stage distillation fraction having been distilled off at a heating temperature of 180°-190 °C were collected. Each of the second stage, third stage and fourth stage distillation fractions was subjected to analysis by means of $^{19}F$-NMR spectroscopy. The results as shown in the following Table were obtained.

| Distillation fraction | Yield | Bifunctionality | $\overline{Mw}n$ |
|---|---|---|---|
| second stage | 10.2 g | 99.6 mol% | 2,010 |
| third stage | 22.8 g | 99.9 mol% or higher | 2,120 |
| fourth stage | 10.6 g | 99.9 mol% or higher | 2,230 |

Synthetic Example 2

In substantially the same manner as described in Synthetic Example 1, except that the column treatment was not conducted, a crude $R_{fo}(CN)_2$ was synthesized, which had a number average molecular weight of 4,760 and a bifunctionality of 97.3 mol%.

130 g of crude $R_{fo}(CN)_2$ was purified by distillation using a Kugelrohr-type thin film distillation apparatus. At a pressure of 0.03 mmHg, 28 g of initial stage distillation fraction having been distilled off at a heating temperature of 210 °C was removed, and 24 g of second stage distillation fraction having been distilled off at a heating temperature of 210°-230 °C and 55 g of third stage distillation fraction having been distilled off at a heating temperature of 230°-250 °C were collected.

As a result of $^{19}$F-NMR spectroscopy analysis, it was found that the number average molecular weight of the second stage distillation fraction was 4,800 and the bifunctionality thereof was 99.5 mol%, and that the number average molecular weight of the third stage distillation fraction was 5,090 and the bifunctionality thereof was not lower than 99.9 mol%.

Synthetic Example 3

Using $R_{fo}(CN)_2$ of the structure represented by the formula:

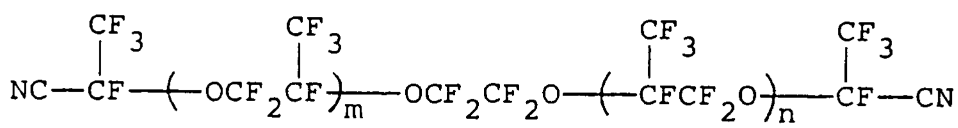

(XXV)

having a number average molecular weight of 4,850 and a bifunctionality of 99.5 mol%, which had been obtained according to exactly the same procedure as employed in obtaining the second stage distillation fraction of Synthetic Example 2, the following reaction was performed.

20 g of ammonia and 30 ml of F-113 were charged in a pressure reactor vessel having an inner volume of 200 ml, and cooled to -15 °C.

While agitating the contents of the reactor vessel, a solution prepared by dissolving 30.0 g of the above-mentioned $R_{fo}(CN)_2$ in 60 g of F-113 was added thereto at a flow rate of 20 ml/hr by means of a quantitative pump. Thereafter, agitation was conducted for 1 hour at -15 °C and for 12 hours at room temperature.

In the reaction solution, a small amount of suspended matter was observed. Therefore, the reaction solution was filtered by means of a filter paper and then the solvent was removed by means of an evaporator while heating at 60 °C. As a result, a transparent viscous substance having a light pink color was obtained in an amount (30.1 g) which is substantially the same as that of the charged $R_{fo}(CN)_2$.

The viscous substance was subjected to infrared absorption spectroscopy. In the spectrum, a characteristic absorption band at 2,260 $cm^{-1}$ attributed to a nitrile group disappeared and a strong characteristic absorption band attributed to an amidine group was observed at 1,695 $cm^{-1}$.

In the $^{19}$F-NMR spectrum as well of the viscous substance, the disappearance of a nitrile group and the formation of an amidine group were confirmed. Further, small amounts of groups other than an amidine group were also observed.

Subsequently, 4.0 g of the viscous substance (hereinafter referred to simply as $DA_1$), which was believed to comprise a diamidine as a principal component, and $R_{fo}(CN)_2$ were added in charge ratios as indicated in Table 1, and dissolved in 50 ml of F-113. The F-113 was completely removed by means of an evaporator, and the resultant transparent homogenous mixture of $DA_1$ and $R_{fo}(CN)_2$ was allowed to stand still at 40 °C for 15 hours. As a result, as shown in Table 1, various polymers were formed, which had respective intrinsic viscosities dependent on the charge ratio of $DA_1$ to $R_{fo}(CN)_2$.

Table 1

| No. of moles of $R_{fo}(CN)_2$ to be reacted with 4 g of $DA_1$/No. of moles of $R_{fo}(CN)_2$ used in the synthesis of 4 g of $DA_1$ (*1) | Intrinsic viscosity of PIA (dl/g) (*2) |
|---|---|
| 0.68 | 0.115 |
| 0.78 | 0.151 |
| 0.82 | 0.178 |
| 0.86 | 0.215 |
| 0.90 | 0.175 |
| 0.94 | 0.144 |
| 0.98 | 0.122 |

(*1) : 0.82 mmol
(*2) : in F-113, 30 °C

The formed polymers were subjected to infrared absorption spectroscopy. In all of the polymers, strong characteristic absorption bands attributed to an imidoylamidine band were observed at 1,600 $cm^{-1}$ and 1,660 $cm^{-1}$, whereby formation of a PIA was confirmed.

PIA's having an intrinsic viscosity of about 0.2 dl/g were a semisolid exhibiting substantially no fluidity but a slight elasticity at about room temperature. PIA's having an intrinsic viscosity of about from 0.12 to 0.15 dl/g were a waxy substance exhibiting a slight fluidity at about room temperature.

The intrinsic viscosity of 0.215 dl/g of the PIA corresponds to a viscosity average molecular weight of about 42 x $10^4$, and the intrinsic viscosity of 0.122 dl/g of the PIA corresponds to a viscosity average molecular weight of about 15 x $10^4$.

Synthetic Example 4

Using the same $R_{fo}(CN)_2$ as in Synthetic Example 3, the following reaction was performed.

50 g of $R_{fo}(CN)_2$, 20.0 g of perfluorohexane and a rotor was put in a round bottom flask having an inner volume of 100 ml, and cooled to -40 °C. Subsequently, about 10 g of ammonia was condensed in the flask, and reaction was performed at -40 °C for about 1 hour. Thereafter, the temperature of the reaction mixture was elevated to about room temperature over a period of about 1 hour, and agitation was further continued for 1 hour.

From the contents of the flask, low boiling point components were evaporated by means of an evaporator, thereby obtaining a viscous substance (hereinafter referred to simply as $DA_2$) comprising a diamidine as a principal component.

The whole quantity of the resultant $DA_2$ and 44.5 g of $R_{fo}(CN)_2$ were dissolved in 200 ml of F-113, and then the F-113 was completely removed by means of an evaporator, thereby obtaining a transparent homogeneous mixture of $DA_2$ and $R_{fo}(CN)_2$. The mixture was allowed to stand still at 40 °C for 20 hours. As a result, a transparent elastic solid exhibiting no fluidity at about room temperature was obtained.

The intrinsic viscosity of the elastic solid PIA as measured in perfluorooctane at 40 °C by means of an Ostwald viscometer was 0.288 dl/g, which corresponded to a viscosity average molecular weight of about 7 x $10^5$.

Synthetic Example 5

The $R_{fo}(CN)_2$ having a number average molecular weight of 5,090 and a bifunctionality not lower than 99.9 mol%, which was obtained as a third stage distillation fraction in Synthetic Example 2, was further purified by column chromatography with silica gel, using perfluorohexane as a developing solvent.

From 10.0 g of the resultant highly purified $R_{fo}(CN)_2$, a viscous substance (hereinafter referred to simply as $DA_3$) comprising a diamidine as a principal component, was obtained by performing the treatment with ammonia according to substantially the same procedure as described in Example 3.

5.0 g of $DA_3$ and 4.40 g of the above-mentioned highly purified $R_{fo}(CN)_2$ were dissolved in 20 ml of perfluorohexane, and the perfluorohexane was completely removed by means of an evaporator, thereby

obtaining a transparent homogeneous mixture of $DA_3$ and $R_{fo}(CN)_2$. The mixture was allowed to stand still at 40 °C for 30 hours, thereby obtaining a colorless, transparent elastic solid exhibiting no fluidity at about room temperature.

The intrinsic viscosity at 50 °C of the elastic solid PIA in 2H-tetradecafluoro-5-(trifluoromethyl) -3,6-dioxanonane was 0.511 dl/g, corresponding to about 2 x $10^6$ in viscosity average molecular weight.

Example 1

From the PIA having an intrinsic viscosity of 0.511 dl/g which was obtained in Synthetic Example 5, a PTR was synthesized according to the following procedure.

A solution prepared by dissolving 4.0 g of PIA in 50 ml of 2H-tetradecafluoro-5-(trifluoromethyl)-3,6-dioxanonane and 4.0 g of trifluoroacetic anhydride were charged into a polyethylene vessel provided with a lid and having an inner volume of 200 ml, and agitated at 40 °C for 15 hours.

Subsequently, 100 ml of diethyl ether was gradually dropwise added to the resultant reaction mixture, thereby causing a polymer to be precipitated. The whole amount of the polymer was dissolved in 50 ml of 2H-tetradecafluoro-5-(trifluoromethyl)-3,6-dioxanonane, and then 100 ml of diethyl ether was added, thereby causing a polymer to be reprecipitated. From the resultant precipitate, low boiling point components were completely removed by means of an evaporator. As a result, 3.95 g of a transparent, elastic solid polymer was obtained.

In the infrared absorption spectrum of the elastic solid, characteristic absorption bands at 1600 $cm^{-1}$ and 1660 $cm^{-1}$, which are attributed to a polyimidoylamidine, disappeared, and a sharp characteristic absorption band attributed to a triazine ring was observed at 1550 $cm^{-1}$. From the above, it was confirmed that by the above procedure, the conversion from the PIA to a PTR was carried out.

The intrinsic viscosity of the resultant PTR was 0.562 dl/g.

The PTR was substantially insoluble in organic solvents, such as toluene, octane, petroleum ether, ethyl ether, ethyl acetate, acetone, carbon tetrachloride, methanol and tetrahydrofuran, exhibiting high solvent resistance.

Incidentally, the PTR was blended with a plastic, such as polyacetal, 6-nylon, polyethylene, polycarbonate and polytetrafluoroethylene, and heated at 70 °C for one week. Despite such a heating, the plastics did not substantially undergo any dimensional change or weight change. From the above, the excellent compatibility of the PTR with various types of plastics was confirmed.

Example 2

From the PIA having an intrinsic viscosity of 0.288 dl/g which was obtained in Synthetic Example 4, a PTR was synthesized according to substantially the same reaction as described in Example 1, except that 10.0 g of

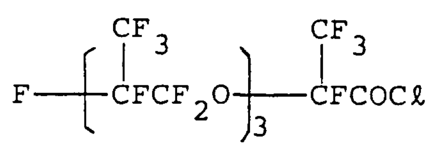

was used in place of 4.0 g of trifluoroacetic anhydride, and that with respect to the reaction conditions, a heating at 80 °C for 24 hours was carried out in place of the heating at 40 °C for 15 hours.

As a result, 4.36 g of a transparent, elastic solid PTR having an intrinsic viscosity of 0.308 dl/g was obtained.

This PTR exhibited the same high solvent resistance and compatibility with various types of plastics as those of the PTR obtained in Example 1.

Comparative Example 1

From the PIA having an intrinsic viscosity of 0.115 dl/g obtained in Synthetic Example 3, a PTR was synthesized according to substantially the same reaction as described in Example 2, except that F-113 was used in place of perfluorohexane, and that with respect to the reaction conditions, a heating at 45 °C for 48 hours was carried out in place of the heating at 50 °C for 30 hours.

As a result, 4.28 g of a transparent, high viscosity PTR having an intrinsic viscosity of 0.126 dl/g was obtained. This PTR as well exhibited the same high solvent resistance and compatibility with various types of plastics as those of the PTR obtained in Example 19.

Example 3

Using the PTR obtained in Example 1 having an intrinsic viscosity of 0.308 dl/g, the PIA's obtained in Example 1, respectively having intrinsic viscosities of 0.112 dl/g and 0.215 dl/g, and a perfluoropolyether having a number average molecular weight of about 6,500 and represented by the following formula:

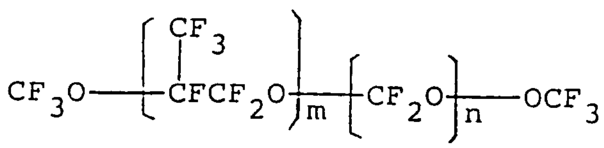

,

a layer of lubricant was formed on the surface of the thin film medium for a magnetic recording disk.

The coefficients of friction on the surfaces of these thin film media for a magnetic recording disk were evaluated using a disk abrasion-friction tester. The results are shown below.

Further, using the same apparatus, CSS test was conducted, and the coefficients of friction, after having repeated a sequence of start and stop 10,000 times, were measured. The results are shown below.

| Sample | Coefficient of friction | |
|---|---|---|
| | initial stage | after (*1) conducting CSS test |
| PTR ( " 0.308 dl/g) | 0.2 | 0.6 |

(*1): after having repeated a sequence of start and stop 10,000 times

Example 4

While rotating the media prepared in Examples 3 at 3,600 rpm, tissue paper dipped in isopropyl alcohol (IPA) was pressed to the disk with a sufficient finger pressure for about 30 seconds. Then, the tissue paper was moved several times across the recorded surface and the resultant medium was air-dried. The coefficients of friction were evaluated in substantially the same manner as before. The results are shown below.

| Sample | Coefficient of friction | |
|---|---|---|
| | initial stage | after PIA wipe |
| PTR ( " 0.308 dl/g) | 0.2 | 0.2 |

As apparent from the results of Examples 3 and 4, PTR having specific viscosity is useful as a lubricant for a magnetic recording material.

Example 5

10 g of the PIA obtained in Synthetic Example 4 was dissolved in 40 g of 2H-tetradecafluoro-5-(trifluoromethyl)-3,6-dioxanonane and cooled to 0 °C, followed by reaction in an atmosphere of ammonia for 24 hours. Then, low boiling point components were removed by means of an evaporator, to thereby obtain a PIA, both terminal groups of which have been converted to amidine groups.

The thus obtained PIA having both terminal groups thereof converted to amidine groups, was again dissolved in 40 g of 2H-tetradecafluoro-5-(trifluoromethyl)-3,6-dioxanonane and then, to the resultant mixture was added 1 g of

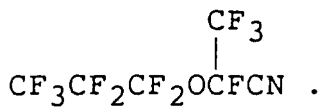

Stirring was conducted at 40 °C for 36 hours. Then, low boiling point components were removed by means of an evaporator, to thereby obtain 9.8 g of a PIA. It is believed that the PIA has a structure of

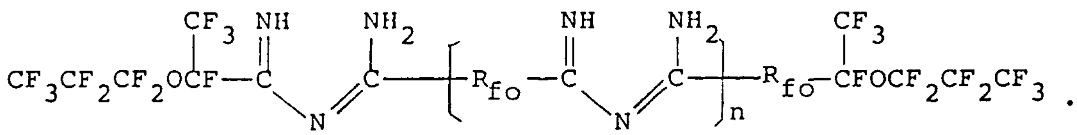

Using the resultant PIA, a PTR was synthesized in substantially the same manner as in Example 1, except that 10.0 g of

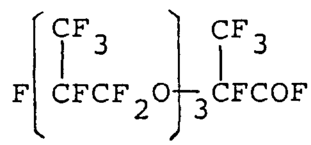

was used instead of 40 g of trifluoroacetic anhydride.

Thus, there was obtained a terminal-stabilized PTR having an intrinsic viscosity of 0.309 dl/g. It is believed that the PTR has a structure of

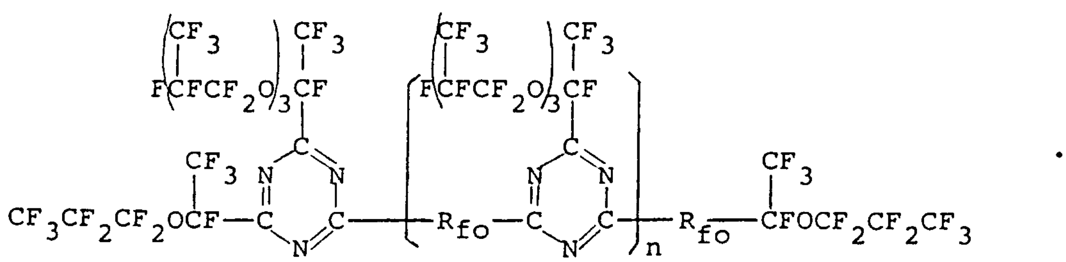

Example 6

With respect to the PTR obtained in Example 2 and the terminal-stabilized PTR obtained in Example 5, the weight decrease rates under heating conditions were determined by means of a thermobalance in air. The results are shown below.

From the results, it is apparent that by the treatment for terminal stabilization in Example 5, the thermal stability of the PTR has been remarkably improved.

| Sample | Weight decrease rate | |
|---|---|---|
| | 330 °C | 370 °C |
| PTR obtained in Example 2 | 0.04 weight %/ min | 0.12 weight %/ min |
| Terminal-stabilized PTR obtained in Example 5 | 0.01 weight %/ min or less | 0.02 weight %/ min |

Example 7

The chemical stability of a PTR having an intrinsic viscosity of 0.315 dl/g, which was synthesized in substantially the same manner as in Example 2, was determined under the following conditions. As a result, it was found that under any of the conditions, the appearance, infrared absorption spectrum and intrinsic viscosity of the PTR were not changed at all.

Conditions for determining chemical stability (*)

- Aqueous NaOCl solution (effective concentration of chlorine: 12 %) 30 °C, 20 hours
- Aqueous $H_2O_2$ solution (35 % by weight) 60 °C, 20 hours
- $CH_3CO_2H$ 60 °C, 20 hours
- $H_2SO_4$ (97 %) 150 °C, 20 hours
- Aqueous NaOH solution (12 % by weight) 60 °C, 20 hours
- Pyridine 60 °C, 20 hours
- Aniline 60 °C, 20 hours

Industrial Applicability

Each of the high molecular weight polyimidoilamidine (PIA) described herein and the high molecular weight polytriazine (PTR) of the present invention derived therefrom has a high viscosity due to the high molecular weight thereof, as compared to the conventional low molecular weight PIA and PTR. In addition, the PTR of the present invention has excellent resistance to chemicals and excellent heat resistance. Therefore, various applications which have not been considered with respect to the conventional PTR can be expected for the PTR of the present invention. The PTR's of this invention are a solid substance, which is useful as a chemically stable structural material.

**Claims**

**1.** A polytriazine comprising recurring units of the following formula:

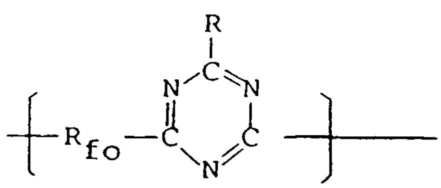

(III)

wherein R is a perfluoroalkyl group having from 1 to 15 carbon atoms which is unsubstituted or substituted or a perfluoroether group having from 2 to 100 carbon atoms which is unsubstituted or substituted, and $R_{fo}$ is a bivalent residue (VIII-1) or (VIII-2) of a bifunctional hexafluoropropylene oxide oligomer, represented by the following formula:

[(*): PTR/liquid for evaluation = 1/100 (weight ratio)]

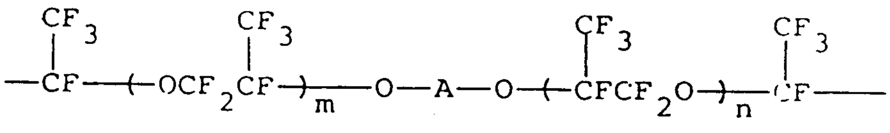 (VIII-1)

or

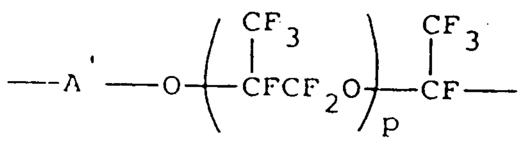 (VIII-2)

in which A is a perfluoroalkylene group having from 2 to 20 carbon atoms which is unsubstituted or substituted, or a bivalent perfluoroether residue having from 4 to 25 carbon atoms which is unsubstituted or substituted, A' is a perfluoroalkylene group having from 1 to 19 carbon atoms which is unsubstituted or substituted, or a bivalent perfluoroether residue having from 3 to 24 carbon atoms which is unsubstituted or substituted, m and n are each a positive integer where $4 \leqq m + n \leqq 300$, and p is an integer of from 4 to 300,

said bivalent residue (VIII-1) or (VIII-2) having a number average molecular weight of from $1 \times 10^3$ to $5 \times 10^4$,

with the proviso that said units of formula (III) are the same or different,

said polytriazine having an intrinsic viscosity of from 0.308 to 0.65 dl/g measured in perfluorohexane at 40 °C.

**2.** The polytriazine according to claim 1, having terminal groups comprised mainly of groups represented by $R^1$, where $R^1$ has the same meaning as defined for R of formula (III), exclusive of those which are substituted with a nitrile group, an ester group or a carboxyl group.

**3.** A method for preparing a polytriazine as claimed in claim 1, which comprises reacting a polyimidoylamidine comprising recurring units of the following formula:

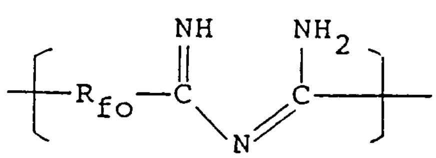 (I)

wherein $R_{fo}$ is as defined in claim 1,

with the proviso that said units of formula (I) are the same or different,

with an acylating agent containing or capable of forming substituent R, where R is as defined in claim 1.

**4.** The method for preparing a polytriazine according to Claim 3, wherein said polyimidoylamidine is a polyimidoylamidine having terminal groups comprised mainly of imidoylamidine groups which is obtained by a process (A), thereby providing a polytriazine having terminal groups comprises mainly of groups represented by $R^1$, where $R^1$ has the same meaning as defined for R of formula (III), exclusive of those which are substituted with a nitrile group, an ester group or a carboxyl group,

said process (A) comprising reacting a monofunctional amidine compound of formula

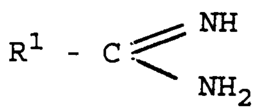

(XIX-2)

wherein $R^1$ is as defined above, with a polyimidoylamidine (ii) having terminal groups comprised mainly of nitrile groups, which is obtained by

(a) reacting a hexafluoropropylene oxide oligomer dinitrile (α) represented by the following formula:

$R_{fo}(CN)_2$ (II)

wherein $R_{fo}$ is as defined above, said oligomer dinitrile (α) having a number average molecular weight of from 1 x $10^3$ to 5 x $10^4$ and a bifunctionality of at least 95 mole %,

with ammonia in a molar ratio of said ammonia to said oligomer dinitrile (α) of at least 5, and

(b) reacting the resultant reaction product with a hexafluoropropylene oxide oligomer dinitrile (β) represented by said formula (II), said oligomer dinitrile (β) having a number average molecular weight of from 1 x $10^3$ to 5 x $10^4$ and a bifunctionality of at least 95 mole % and being employed in a molar ratio of from 0.60 to 0.99 relative to said oligomer dinitrile (α),

wherein said oligomer dinitriles (α) and (β) are the same or different,

to convert the terminal nitrile groups of said polyimidoylamidine (ii) to imidoylamidine groups.

**5.** The method for preparing a polytriazine according to Claim 3, wherein said polymidoylamidine is a polyimidoylamidine having terminal groups comprised mainly of imidoylamidine groups which is obtained by a process (B), thereby providing a polytriazine having terminal groups comprised mainly of groups represented by $R^1$, where $R^1$ has the same meaning as defined for R of formula (III), exclusive of those which are substituted with a nitrile group, an ester group or a carboxyl group,

said process (B) comprising reacting (i) a polyimidoylamidine having terminal groups comprised mainly of amidine groups with a monofunctional nitrile compound of the following formula:

$R^1$-CN (XIX-1)

wherein $R^1$ is as defined above,

to convert the terminal amidine groups of said polyimidoylamidine (i) to imidoylamidine groups,

said polyimidoylamidine (i) being obtained by method (C) which comprises:

(a) reacting a hexafluoropropylene oxide oligomer dinitrile (α) represented by the following formula:

$R_{fo}(CN)_2$ (II)

wherein $R_{fo}$ is as defined above,

said oligomer dinitrile (α) having a number average molecular weight of from 1 x $10^3$ to 5 x $10^4$ and a bifunctionality of at least 95 mole %,

with ammonia in a molar ratio of said ammonia to said oligomer dinitrile (α) of at least 5, and

(b) reacting the resultant reaction product with a hexafluoropropylene oxide oligomer dinitrile (β) represented by said formula (II), said oligomer dinitrile (β) having number average molecular weight of from 1 x $10^3$ to 5 x $10^4$ and a bifunctionality of at least 95 mole % and being employed in a molar ratio of from 0.60 to 0.99 relative to said oligomer dinitrile (α),

wherein said oligomer dinitrile (α) and (β) are the same or different,

or being obtained by method (C) which, when the product of method (C) is (ii), a polyimidoylamidine having terminal groups comprised mainly of nitrile groups, (iii) a polyimidoylamidine having terminal groups comprised mainly of nitrile groups and amidine groups or (iv) a mixture thereof, further comprises reacting said polyimidoylamidine (ii) or (iii), or said mixture (iv) with ammonia.

## Patentansprüche

1. Polytriazin, das wiederkehrende Einheiten der folgenden Formel aufweist:

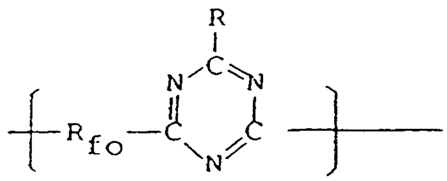

(III)

worin R eine Perfluoralkylgruppe mit 1 bis 15 Kohlenstoffatomen, die unsubstituiert oder substituiert ist, oder eine Perfluorethergruppe mit 2 bis 100 Kohlenstoffatomen, die unsubstituiert oder substituiert ist, bedeutet und $R_{fo}$ ein zweiwertiger Rest (VIII-1) oder (VIII-2) eines bifunktionellen Hexafluorpropylenoxid-Oligomeren ist, der durch die folgenden Formeln dargestellt wird:

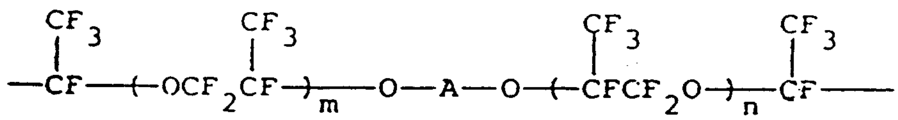

(VIII-1)

oder

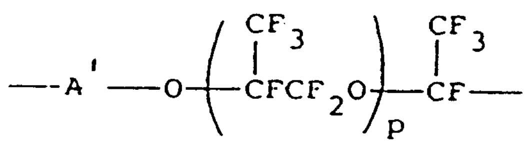

(VIII-2)

wobei A eine Perfluoralkylengruppe mit 2 bis 20 Kohlenstoffatomen, die unsubstituiert oder substituiert ist, oder einen zweiwertigen Perfluoretherrest mit 4 bis 25 Kohlenstoffatomen, der unsubstituiert oder substituiert ist, bedeutet, A' eine Perfluoralkylengruppe mit 1 bis 19 Kohlenstoffatomen, die unsubstituiert oder substituiert ist, oder einen zweiwertigen Perfluoretherrest mit 3 bis 24 Kohlenstoffatomen, der unsubstituiert oder substituiert ist, bedeutet, m und n jeweils eine positive ganze Zahl sind, wobei $4 \leqq m + n \leqq 300$ und p eine ganze Zahl von 4 bis 300 ist,
wobei der zweiwertige Rest (VIII-1) oder (VIII-2) ein Zahlenmittel des Molekulargewichts von $1 \times 10^3$ bis $5 \times 10^4$ hat, mit der Maßgabe, daß die Einheiten der (III) gleich oder verschieden sind,

wobei das Polytriazin eine in Perfluorhexan bei 40 °C gemessene Grenzviskositätszahl von 0,308 bis 0,65 dl/g hat.

2. Polytriazin nach Anspruch 1, dessen Endgruppen hauptsachlich aus durch $R^1$ dargestellten Gruppen bestehen, wobei $R^1$ die für R der Formel (III) definierte Bedeutung hat, mit der Ausnahme der Gruppen, die mit einer Nitrilgruppe, einer Estergruppe oder einer Carboxylgruppe substituiert sind.

3. Verfahren zur Herstellung eines Polytriazins gemäß Anspruch 1, welches die Umsetzung eines Polyimidoylamidins, das wiederkehrende Einheiten der folgenden Formel aufweist

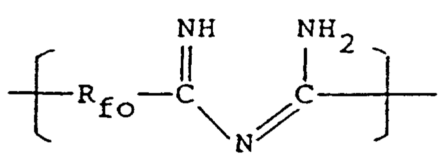

(I)

wobei $R_{fo}$ wie in Anspruch 1 definiert ist,
mit der Maßgabe, daß die Einheiten der Formel (I) gleich oder verschieden sind,
mit einem Acylierungsmittel umfaßt, welches den Substituenten R enthält, oder befähigt ist, diesen zu bilden, wobei R wie in Anspruch 1 definiert ist.

**4.** Verfahren zur Herstellung eines Polytriazins nach Anspruch 3, wobei das Polyimidoylamidin ein Polyimidoylamidin mit Endgruppen, die hauptsächlich aus Imidoylamidingruppen bestehen, ist, welches mit Hilfe eines Verfahrens (A) erhalten wird, wobei ein Polytriazin erhalten wird, dessen Endgruppen hauptsächlich aus durch $R^1$ dargestellten Gruppen bestehen, wobei $R^1$ die Bedeutung hat, die für R der Formel (III) definiert ist, ausgenommen solche Gruppen, die durch eine Nitrilgruppe, eine Estergruppe oder eine Carboxylgruppe substituiert sind,
wobei Verfahren (A) umfaßt:
die Umsetzung einer monofunktionellen Amidinverbindung der Formel:

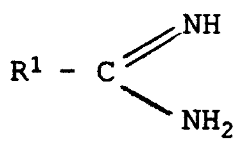

(XIX-2)

wobei $R^1$ wie oben definiert ist,
mit einem Polyimidoylamidin (ii), dessen Endgruppen hauptsächlich aus Nitrilgruppen bestehen, welches erhalten wird durch
(a) Umsetzen eines Hexafluorpropylenoxid-Oligomer-Dinitrils (α), dargestellt durch die folgende Formel:

$R_{fo}(CN)_2$ (II)

wobei $R_{fo}$ wie oben definiert ist, wobei das Oligomer-Dinitril (α) ein Zahlenmittel des Molekulargewichts von $1 \times 10^3$ bis $5 \times 10^4$ und eine Bifunktionalität von mindestens 95 Mol% hat,
mit Ammoniak in einem Molverhältnis von Ammoniak zu dem Oligomer-Dinitril (α) von mindestens 5, und
(b) Umsetzen des erhaltenen Reaktionsprodukts mit einem Hexafluorpropylenoxid-Oligomer-Dinitril (β), das durch die Formel (II) dargestellt wird, wobei das Oligomer-Dinitril (β) ein Zahlenmittel des Molekulargewichts von $1 \times 10^3$ bis $5 \times 10^4$ und eine Bifunktionalität von mindestens 95 Mol% aufweist und in einem Molverhältnis von 0,60 bis 0,99, bezogen auf das Oligomer-Dinitril (α) eingesetzt wird,
wobei die Oligomer-Dinitrile (α) und (β) gleich oder verschieden sind,
so daß die endständigen Nitrilgruppen des Polyimidoylamidins (ii) in Imidoylamidingruppen umgewandelt werden.

**5.** Verfahren zur Herstellung eines Polytriazins nach Anspruch 3, wobei das Polyimidoylamidin ein Polyimidoylamidin mit Endgruppen ist, die hauptsächlich aus Imidoylamidingruppen bestehen, welches mit Hilfe eines Verfahrens (B) erhalten wird,
so daß ein Polytriazin erhalten wird, dessen Endgruppen hauptsächlich aus durch R' dargestellten Gruppen bestehen, wobei R' die gleiche Bedeutung hat, die für R der Formel (III) definiert ist, ausgenommen solche Gruppen, die mit einer Nitrilgruppe, einer Estergruppe oder einer Carboxylgruppe substituiert sind,
wobei das Verfahren (B) die Umsetzung (i) eines Polyimidoylamidins, dessen Endgruppen hauptsächlich aus Amidingruppen bestehen, mit einer monofunktionellen Nitrilverbindung der folgenden Formel:

$R^1$-CN (XIX-1)

worin R' wie oben definiert ist, umfaßt,
so daß die endständigen Amidingruppen des Polyimidoylamidins (i) in Imidoylamidingruppen umgewandelt werden,

wobei das Polyimidoylamidin (i) mittels eines Verfahrens (C) erhalten wird, welches umfaßt:
(a) Umsetzen eines Hexafluorpropylenoxid-OligomerDinitrils (α), das durch die folgende Formel dargestellt ist:

$R_{fo}(CN)_2$ (II)

worin $R_{fo}$ wie oben definiert ist,
wobei das Oligomer-Dinitril (α) ein Zahlenmittel des Molekulargewichts von 1 x $10^3$ bis 5 x $10^4$ und eine Bifunktionalität von mindestens 95 Mol% hat,
mit Ammoniak in einem Molverhältnis von Ammoniak zu dem Oligomer-Dinitril (α) von mindestens 5, und
(b) Umsetzen des gebildeten Reaktionsprodukts mit einem durch die Formel (II) dargestellten Hexafluorpropylenoxid-Oligomer-Dinitril (β), wobei das Oligomer-Dinitril (β) ein Zahlenmittel des Molekulargewichts von 1 x $10^3$ bis 5 x $10^4$ und eine Bifunktionalität von mindestens 95 Mol% hat und in einem Molverhältnis von 0,60 bis 0,99, bezogen auf das Oligomer-Dinitril (α), eingesetzt wird,
wobei die Oligomer-Dinitrile (α) und (β) gleich oder verschieden sind,
oder wobei das Polyimidoylamidin (i) durch Verfahren (C) erhalten wird, welches dann, wenn das Produkt von Verfahren (C) (ii) ein Polyimidoylamidin, dessen Endgruppen hauptsächlich aus Nitrilgruppen bestehen, (iii) ein Polyimidoylamidin, dessen Endgruppen hauptsächlich aus Nitrilgruppen und Amidingruppen bestehen oder (iv) ein Gemisch davon ist, weiterhin die Umsetzung dieses Polyimidoylamidins (ii) oder (iii) oder dieses Gemisches (iv) mit Ammoniak umfaßt.

**Revendications**

**1.** Polytriazine comprenant des motifs répétitifs ayant la formule suivante :

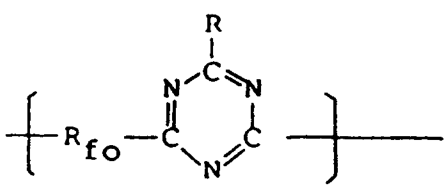

(III)

dans laquelle R est un groupe perfluoroalcoyle ayant de 1 à 15 atomes de carbone, qui est non substitué ou substitué, ou un groupe perfluoroéther ayant de 2 à 100 atomes de carbone, qui est non substitué ou substitué, et $R_{fo}$ est un résidu bivalent (VIII-1) ou (VIII-2) d'un oligomère d'oxyde d'hexafluoropropylène bifonctionnel, représenté par la formule suivante :

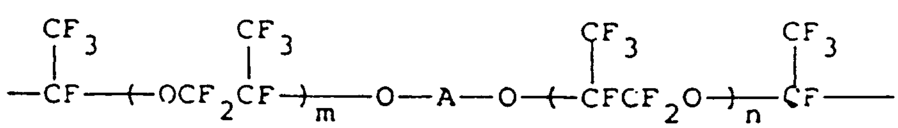

(VIII-1)

ou

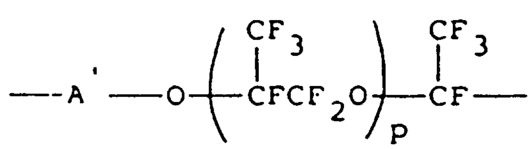

(VIII-2)

dans laquelle A est un groupe perfluoroalkylène ayant de 2 à 20 atomes de carbone, qui est non substitué ou substitué, ou un résidu perfluoroéther bivalent ayant de 4 à 25 atomes de carbone, qui est non substitué ou substitué, A' est un groupe perfluoralkylène ayant de 1 à 19 atomes de carbone, qui est non substitué ou substitué, ou un résidu perfluoroéther bivalent ayant de 3 à 24 atomes de carbone,

qui est non substitué ou substitué, m et n sont chacun un entier positif tel que $4 \leqq m + n \leqq 300$, et p est un entier de 4 à 300,

ledit résidu bivalent (VIII-1) ou (VIII-2) ayant une masse moléculaire moyenne en nombre de $10^3$ à $5.10^4$,

du moment que lesdits motifs de formule (III) sont identiques ou différents,

ladite polytriazine ayant une viscosité intrinsèque, mesurée dans le perfluorohexane à 40 °C, de 0,308 à 0,65 dl/g.

2. Polytriazine selon la revendication 1, qui comporte des groupes terminaux constitués essentiellement de groupes représentés par $R^1$, où $R^1$ a les mêmes significations que celles qui sont données pour R dans la formule (III), à l'exclusion de ceux qui sont substitués par un groupe nitrile, un groupe ester ou un groupe carboxyle.

3. Procédé pour préparer une polytriazine selon la revendication 1, qui consiste à faire réagir une polyimidoylamidine comprenant des motifs répétitifs ayant la formule suivante :

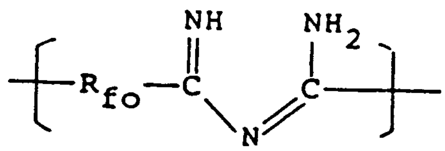

(I)

dans laquelle $R_{fo}$ est tel que défini dans la revendication 1,

du moment que lesdits motifs de formule (I) sont identiques ou différents,

avec un agent d'acylation contenant ou capable de former le substituant R, où R est tel que défini dans la revendication 1.

4. Procédé pour préparer une polytriazine selon la revendication 3, dans lequel ladite polyimidoylamidine est une polyimidoylamidine ayant des groupes terminaux constitués essentiellement de groupes imidoylamidine, et qui est obtenue par un procédé (A), de façon à donner une polytriazine ayant des groupes terminaux constitués essentiellement de groupes représentés par $R^1$, où $R^1$ a les mêmes significations que celles qui sont données pour R dans la formule (III), a l'exclusion de ceux qui sont substitués par un groupe nitrile, un groupe ester ou un groupe carboxyle,

ledit procédé (A) consistant à faire réagir une amidine monofonctionnelle de formule

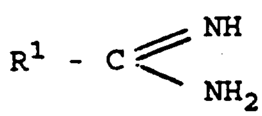

(XIX-2)

dans laquelle $R^1$ est tel que défini ci-dessus, avec une polyimidoylamidine (ii) ayant des groupes terminaux constitués essentiellement de groupes nitrile, que l'on obtient

(a) en faisant réagir un (oligomère d'oxyde d'hexafluoropropylène)-dinitrile ($\alpha$) représenté par la formule suivante :

$R_{fo}(CN)_2$ (II)

dans laquelle $R_{fo}$ est tel que défini ci-dessus, ledit oligomère-dinitrile ($\alpha$) ayant une masse moléculaire moyenne en nombre comprise entre $10^3$ et $5.10^4$ et une bifonctionnalité d'au moins 95 % en moles,

avec de l'ammoniac selon un rapport en moles dudit ammoniac audit oligomère-dinitrile ($\alpha$) d'au moins 5, et

(b) à faire réagir le produit de réaction obtenu avec un (oligomère d'oxyde d'hexafluoropropylène)-dinitrile ($\beta$), représenté par ladite formule (II), ledit oligomère-dinitrile ($\beta$) ayant une masse moléculaire moyenne en nombre de $10^3$ à $5.10^4$ et une bifonctionnalité d'au moins 95 % en moles, et étant utilisé selon un rapport en moles de 0,60 à 0,99 par rapport audit oligomère-dinitrile ($\alpha$),

où lesdits oligomère-dinitriles ($\alpha$) et ($\beta$) sont identiques ou différents,

pour convertir les groupes nitrile terminaux de ladite polyimidoylamidine (ii) en groupes imidoylamidine.

**5.** Procédé pour préparer une polytriazine selon la revendication 3, dans lequel ladite polyimidoylamidine est une polyimidoylamidine ayant des groupes terminaux constitués essentiellement de groupes imidoylamidine, et pouvant être préparée par un procédé (B), de façon à donner une polytriazine ayant des groupes terminaux constitués essentiellement de groupes représentés par $R^1$, où $R^1$ a les mêmes significations que celles qui sont données pour R dans la formule (III), à l'exclusion de ceux qui sont substitués par un groupe nitrile, un groupe ester ou un groupe carboxyle,

ledit procédé (B) consistant à faire réagir (i) une polyimidoylamidine ayant des groupes terminaux constitués essentiellement de groupes amidine, avec un nitrile mono-fonctionnel ayant la formule suivante :

$R^1$-CN (XIX-1)

dans laquelle $R^1$ est tel que défini ci-dessus,

pour convertir les groupes amidine terminaux de ladite polyimidoylamidine (i) en groupes imidoylamidine,

ladite polyimidoylamidine (i) étant obtenue par un procédé (C), qui consiste

(a) à faire réagir un (oligomère d'oxyde d'hexafluoropropylène)-dinitrile ($\alpha$), représenté par la formule suivante :

$R_{fo}(CN)_2$ (II)

dans laquelle $R_{fo}$ est tel que défini ci-dessus,

ledit oligomère-dinitrile ($\alpha$) ayant une masse moléculaire moyenne en nombre de $10^3$ à $5.10^4$ et une bifonctionnalité d'au moins 95 % en moles,

avec de l'ammoniac selon un rapport en moles dudit ammoniac audit oligomère-dinitrile ($\alpha$) d'au moins 5, et

(b) à faire réagir le produit de réaction obtenu avec un (oligomère d'oxyde d'hexafluoropropylène)-dinitrile ($\beta$), représenté par ladite formule (II), ledit oligomère-dinitrile ($\beta$) ayant une masse moléculaire moyenne en nombre de $10^3$ à $5.10^4$ et une bifonctionnalité d'au moins 95 % en moles, et étant utilisé selon un rapport en moles de 0,60 à 0,99 par rapport audit oligo-mère-dinitrile ($\alpha$),

où lesdits oligomère-dinitriles ($\alpha$) et ($\beta$) sont identiques ou différents,

ou étant obtenue par le procédé (C) qui, quand le produit du procédé (C) est (ii) une polyimidoylamidine ayant des groupes terminaux constitués essentiellement de groupes nitrile, (iii) une polyimidoylamidine ayant des groupes terminaux constitués essentiellement de groupes nitrile et de groupes amidine, ou (iv) un mélange de ces derniers, consiste en outre à faire réagir ladite polyimidoylamidine (ii) ou (iii), ou ledit mélange (iv), avec de l'ammoniac.